# EUROPEAN PATENT APPLICATION

(11) **EP 1 615 170 A1**
(43) Date of publication of application: **11.01.2006**
(21) Application number: 04016307.3
(22) Date of filing: 10.07.2004
(51) Int. Cl.: G06T 7/00

(54) **Image segmentation algorithms for applications in cellular biology**

(71) Applicant: Evotec Technologies GmbH, 40225 Düsseldorf (DE)
(72) Inventor: Kirsch, Achim, Dr., 22525 Hamburg (DE); Jetzek, Fritz, 22085 Hamburg (DE)
(74) Representative: von Kreisler Selting Werner

(57) **Abstract**

A method for the detection of linear objects in images, particularly in images of chemical and/ or biological samples such as cell images, comprising the following Steps:
detecting a borderline of an imaged object,
defining at least one sector space which comprises a sector origin located on the borderline,
transforming the image space corresponding to the sector space through a transformation suited for line identification,
within the transformed sector space, determining zero or more maximums corresponding to the linear object, and
back transformation of the sector space for representation of the linear object.

## Description

### Inventions

One of the various inventions disclosed in this document is a method for the detection of linear objects in images. This method, which is particularly used for the detection of linear objects in images of chemical and/ or biological samples such as cell images, is in detail particularly described in chapter four. The main steps of the method are:
detecting a borderline of an imaged object,
defining at least one sector space which comprises a sector origin located on the borderline,
transforming the image space corresponding to the sector space through a transformation suited for basic geometric object indication, particularily line identification, in particular rings, ellipses and the like
within the transformed sector space, determining if there is one or more signatures, e.g. zero or more maximums and/minimums corresponding to basic geometric object, particularily the linear object, and
back transformation of the signatures from the transformed sector space into the sector space for representation of the basic geometric object for representation of the linear object.

Preferred embodiments are described within the dependent claims.

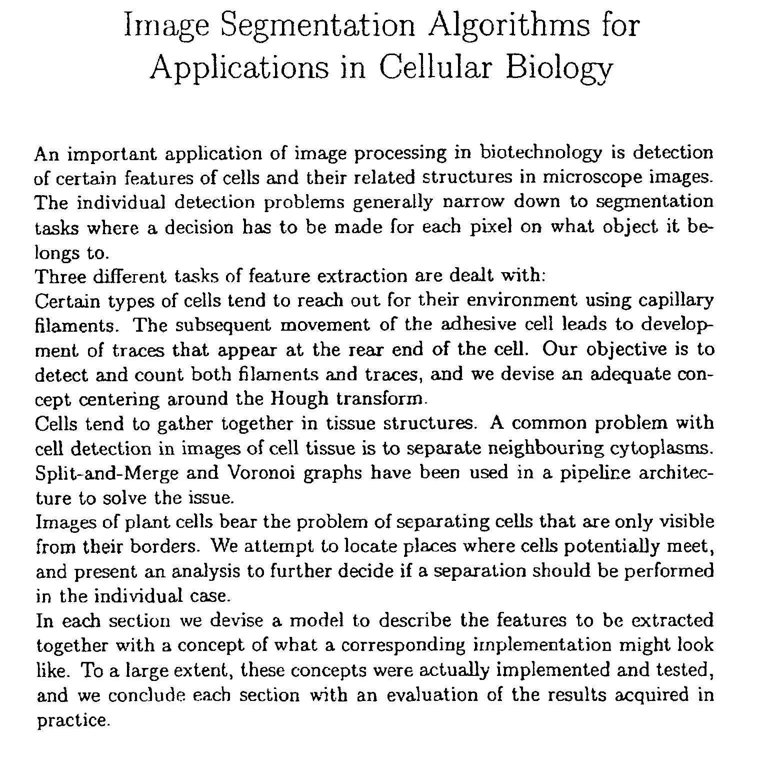

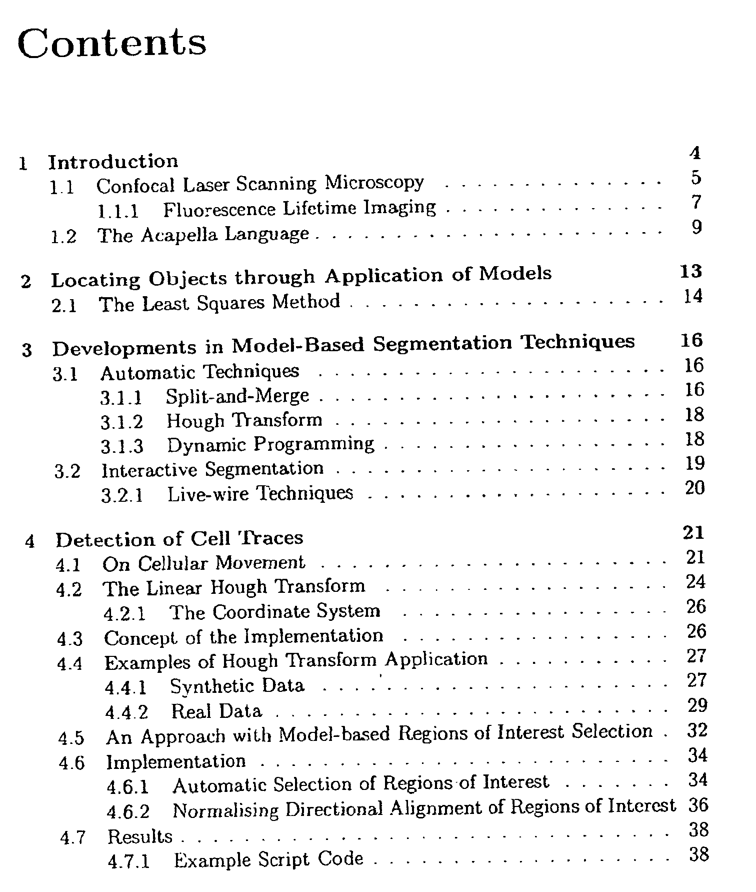

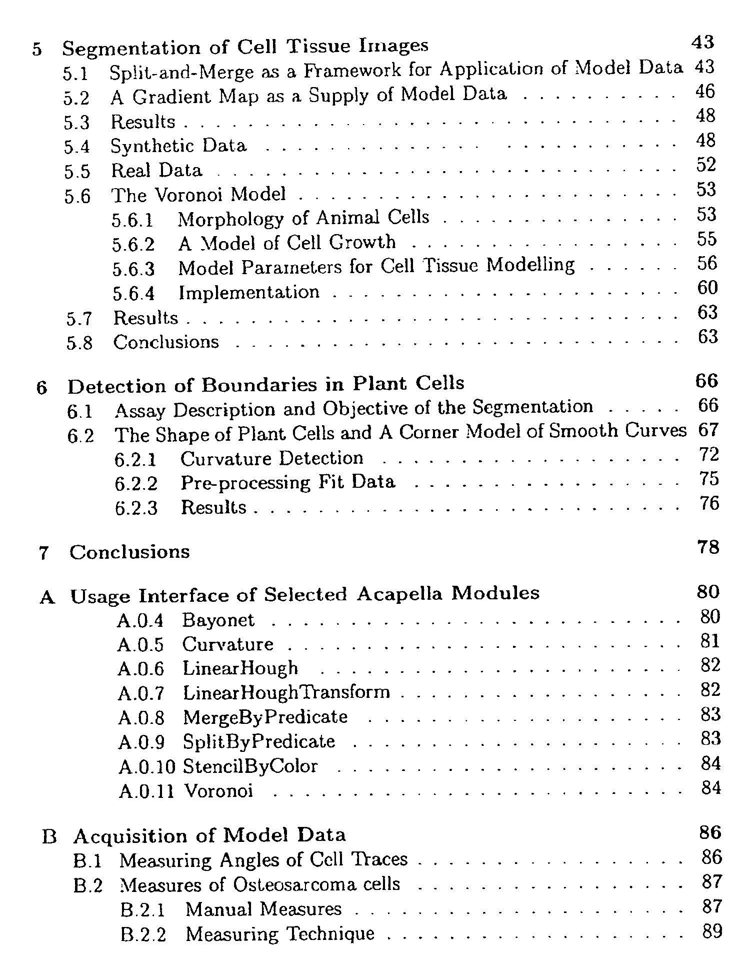

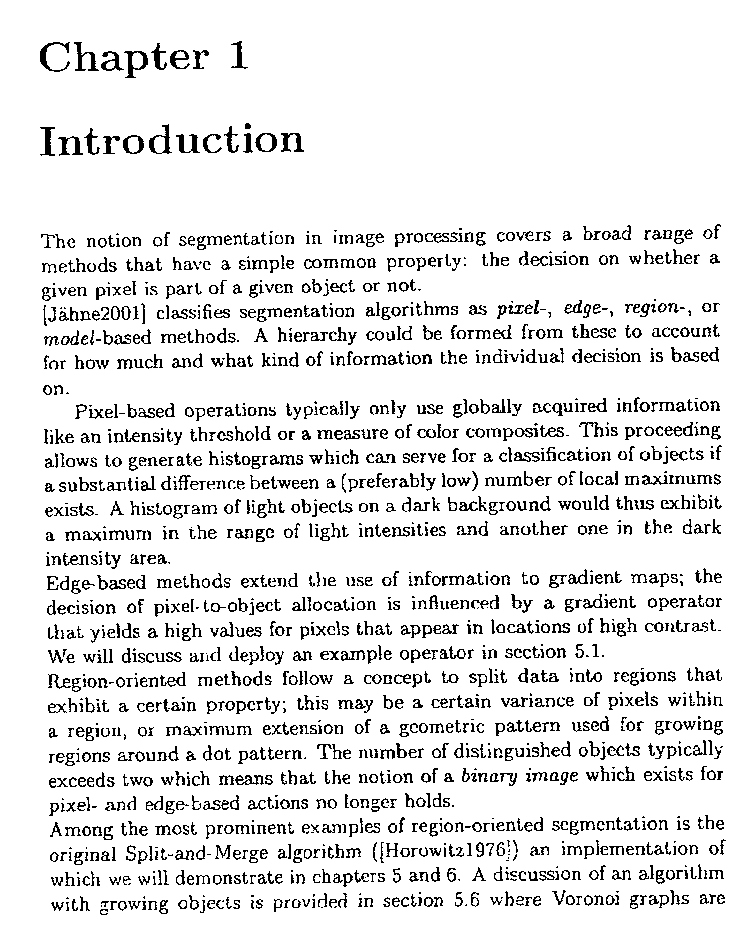

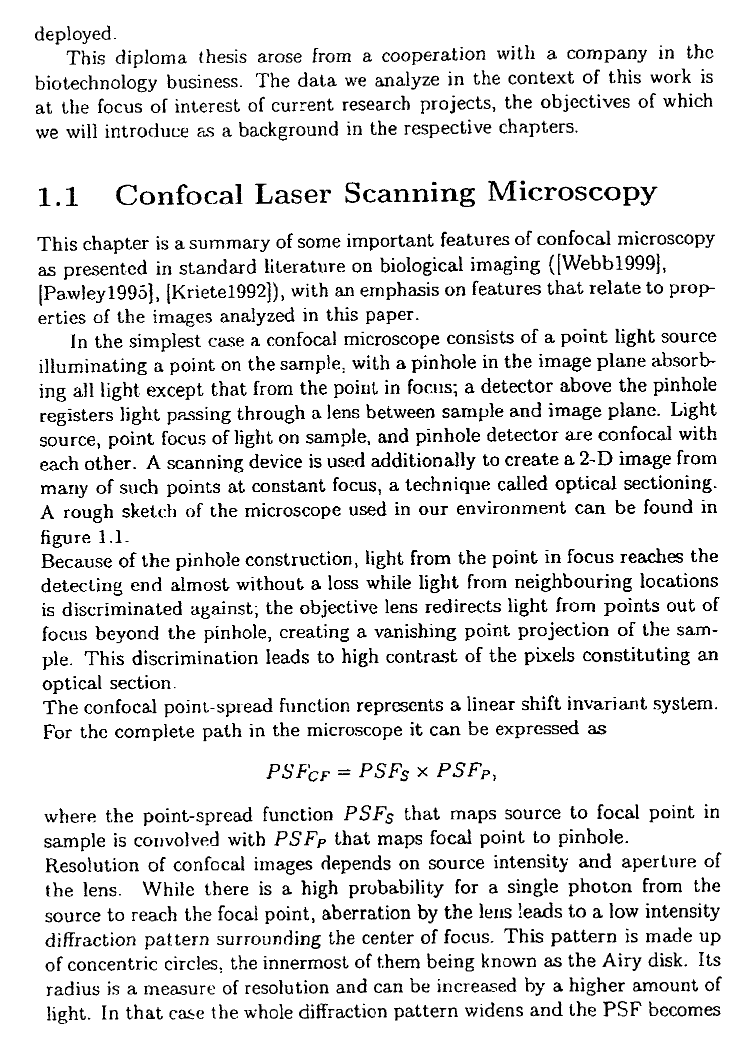

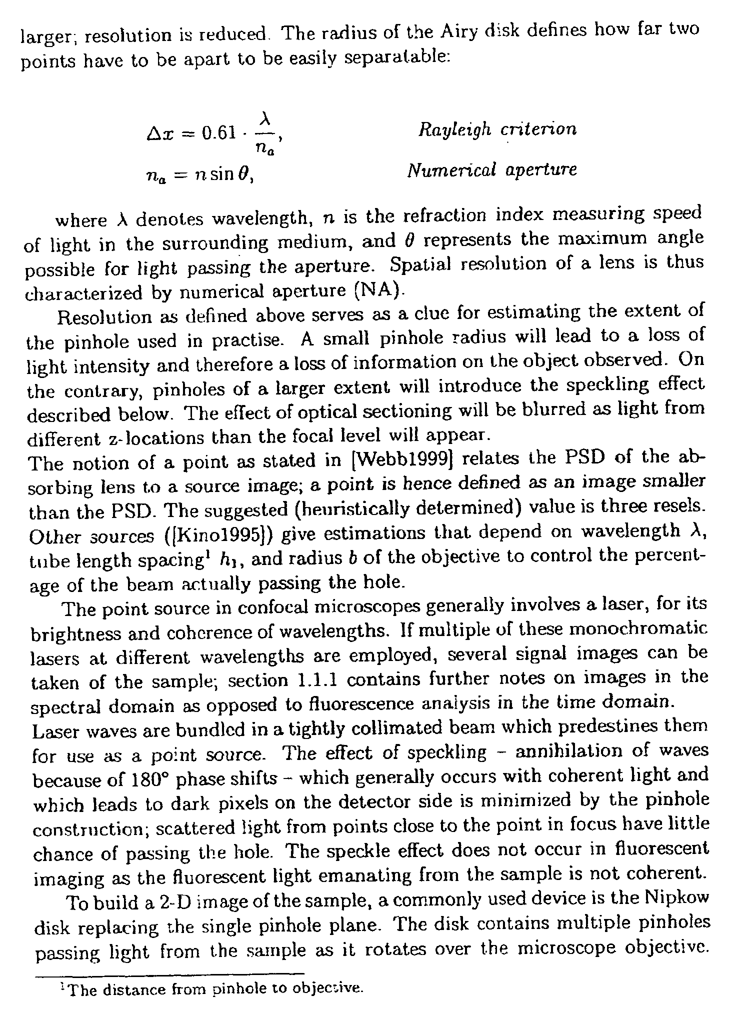

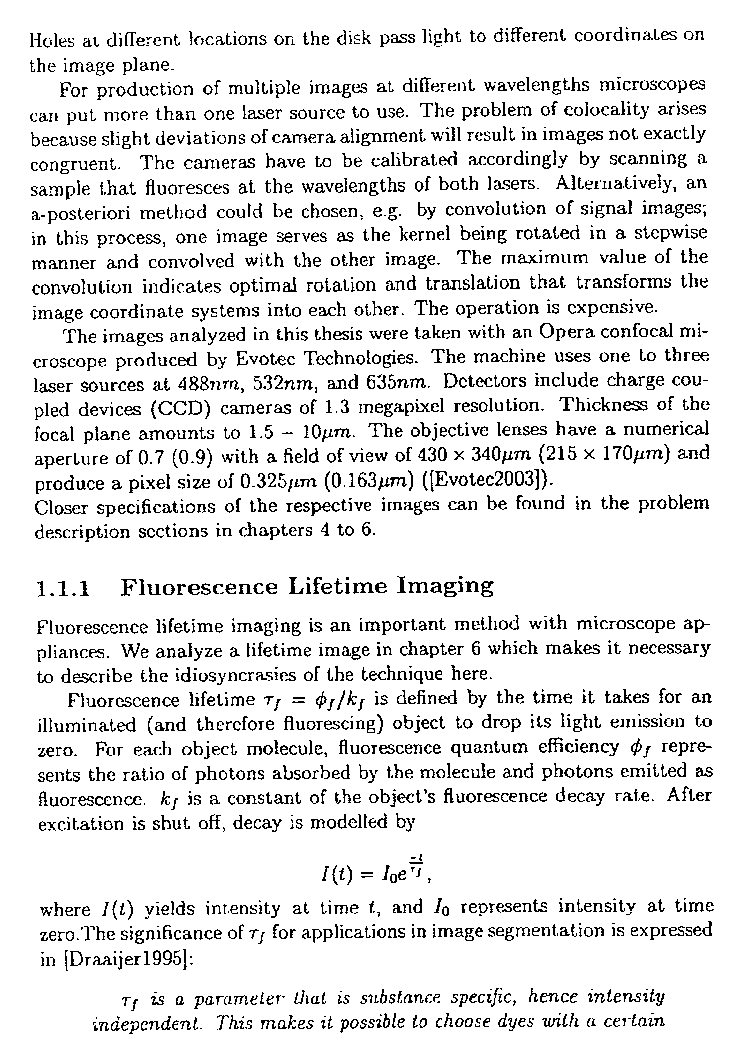

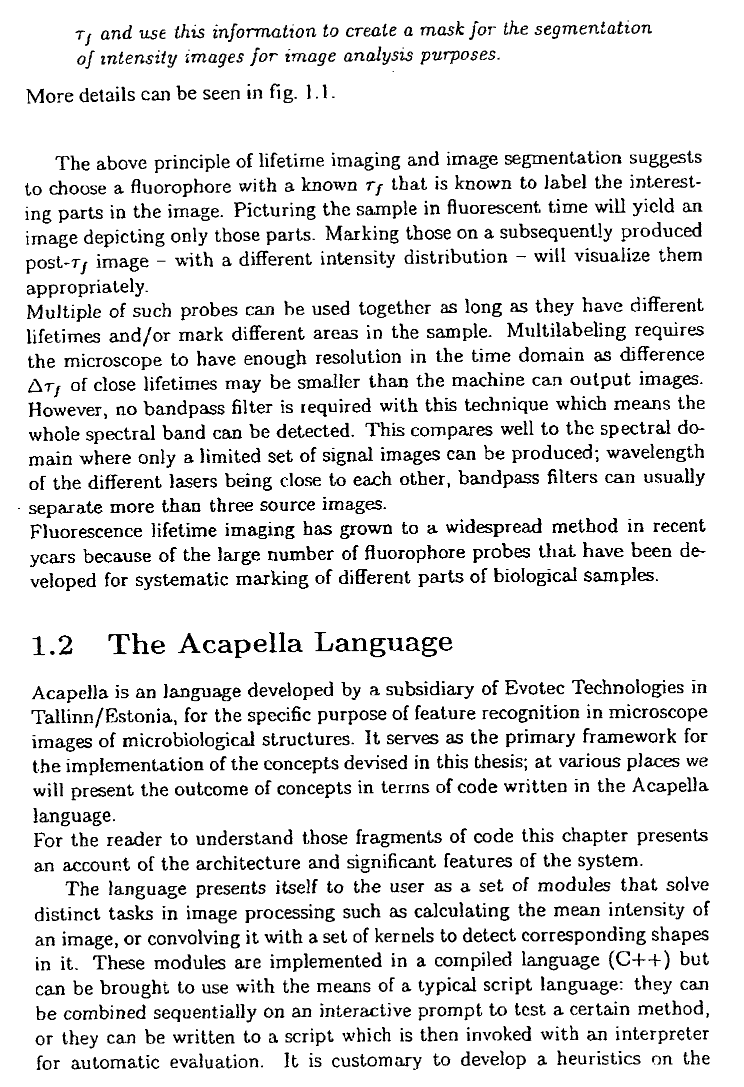

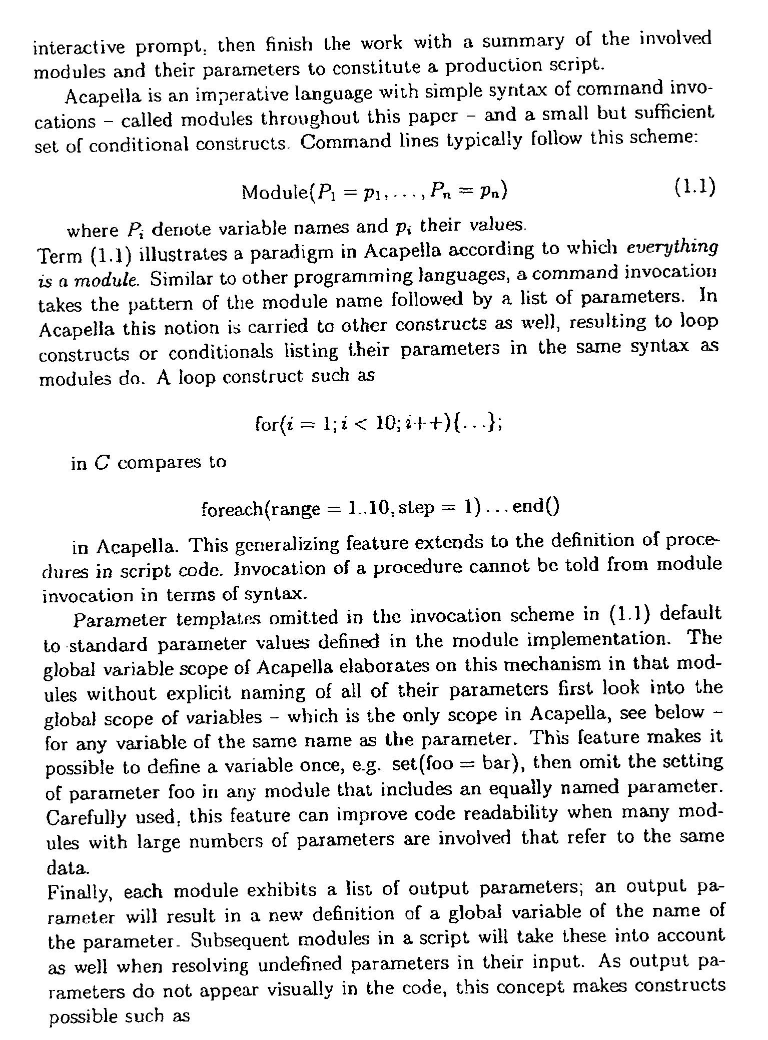

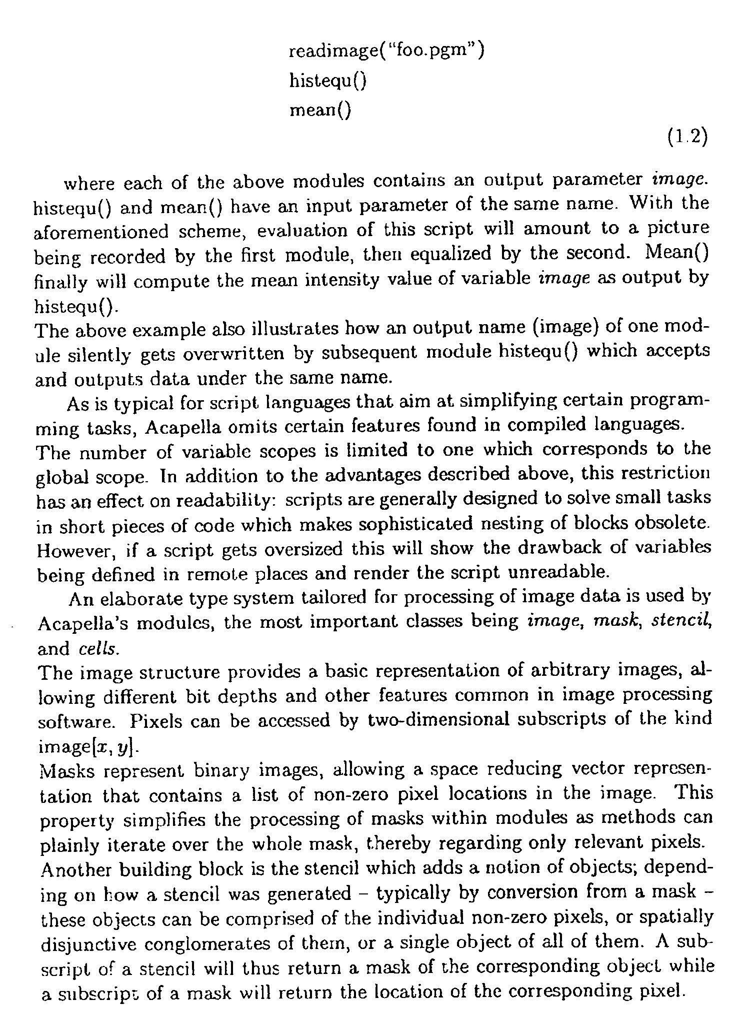

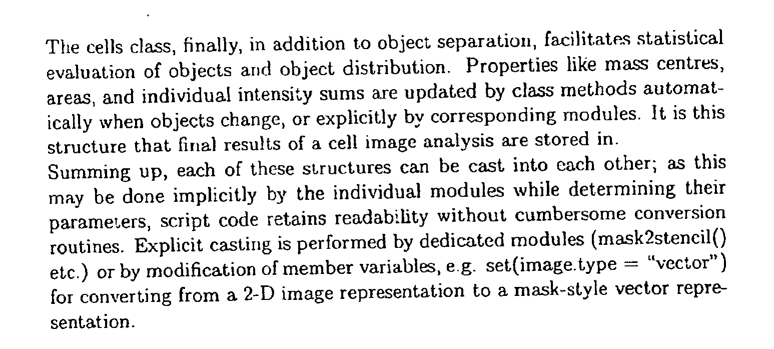

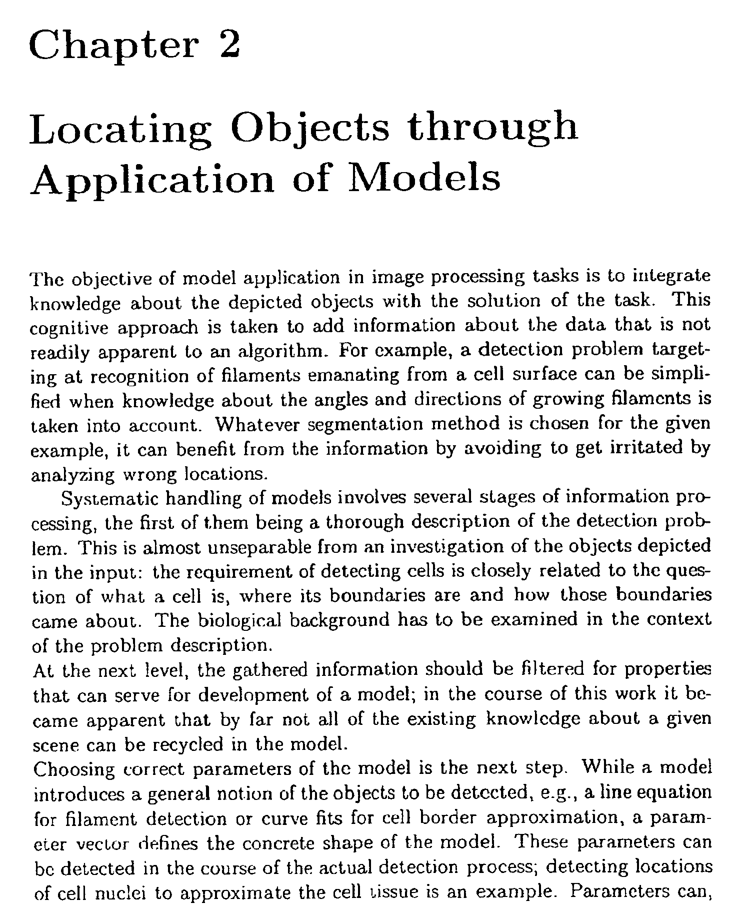

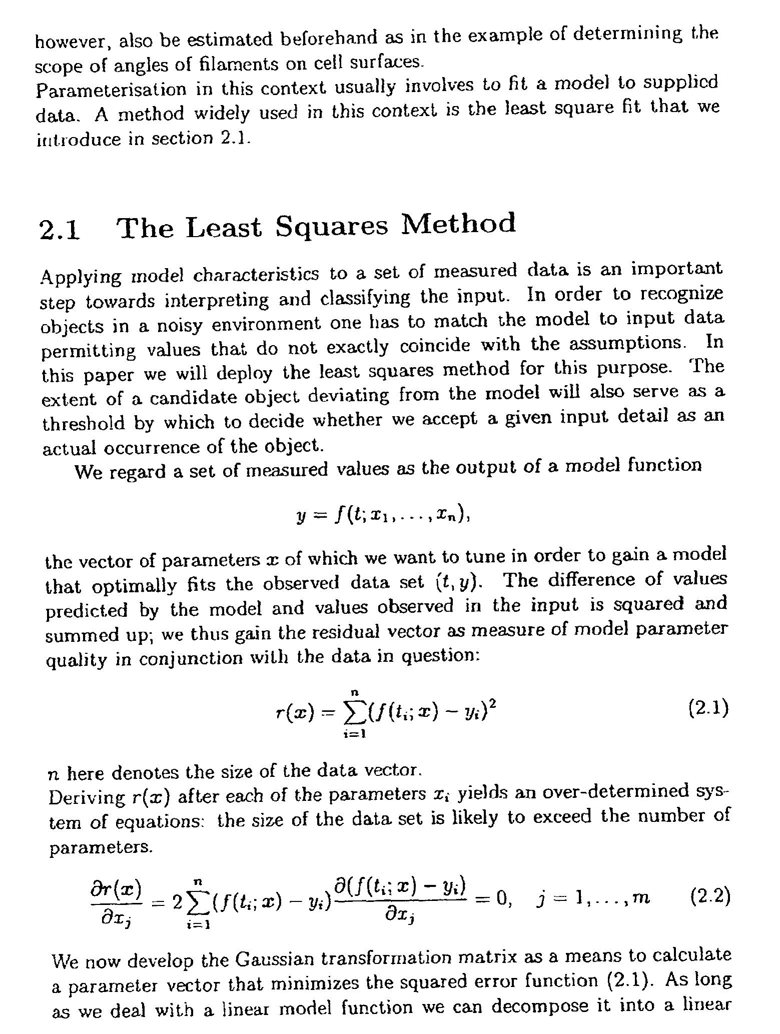

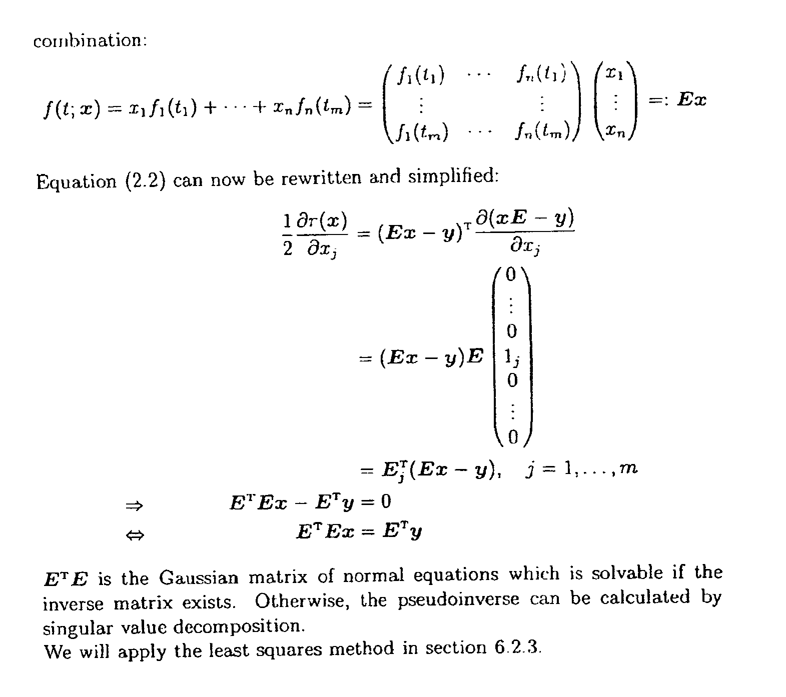

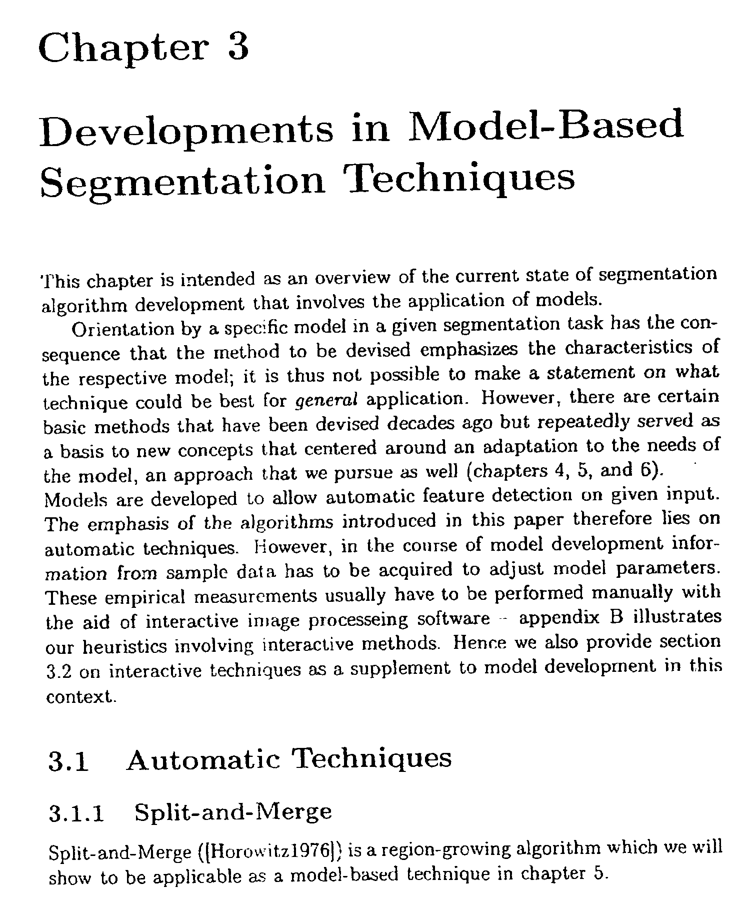

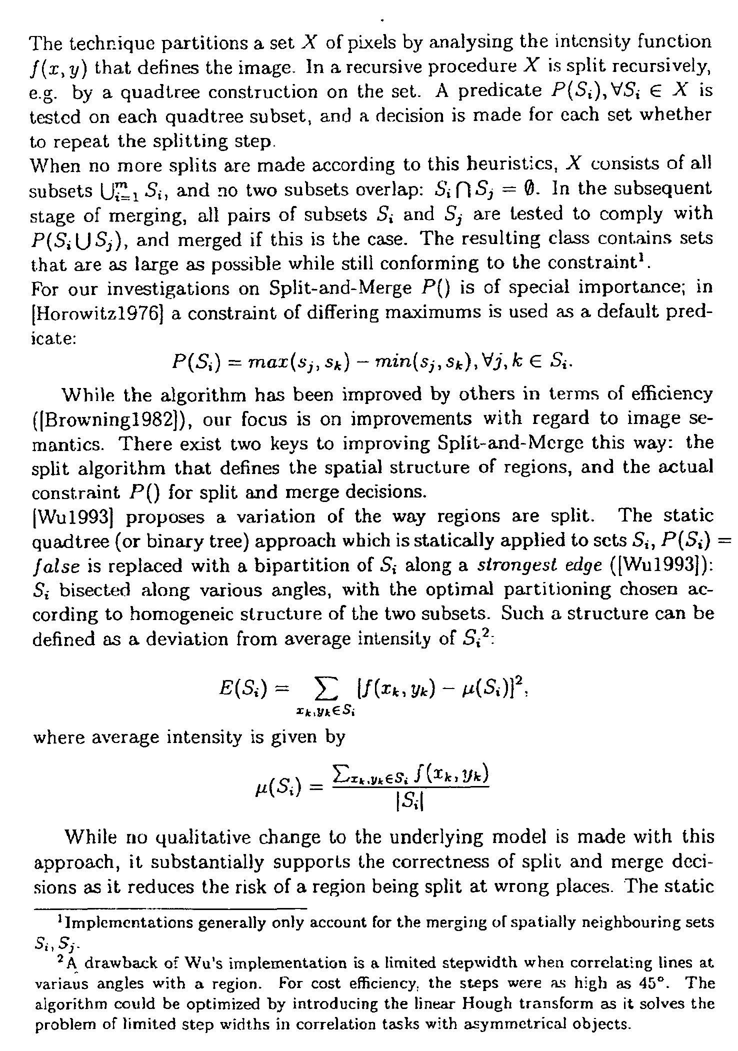

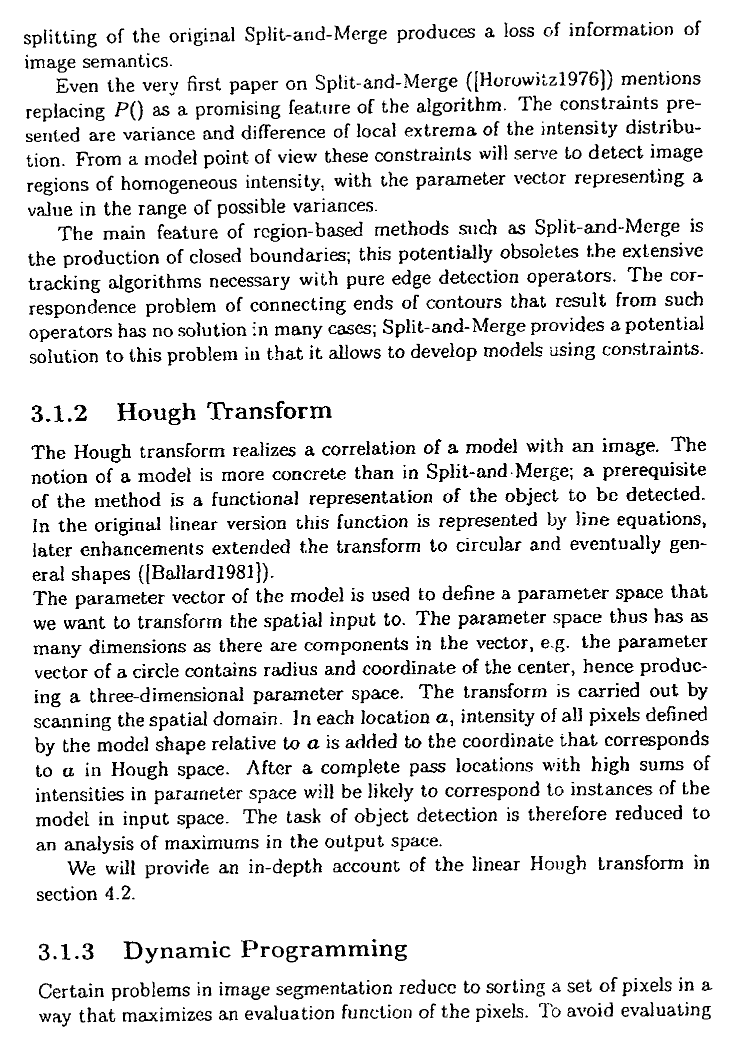

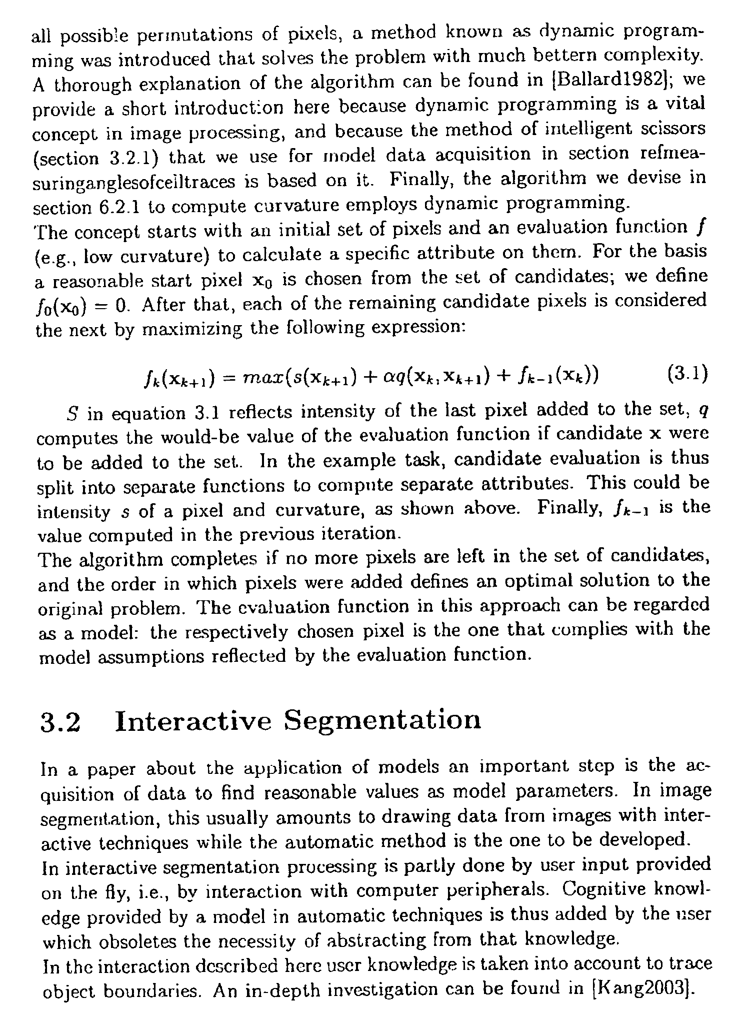

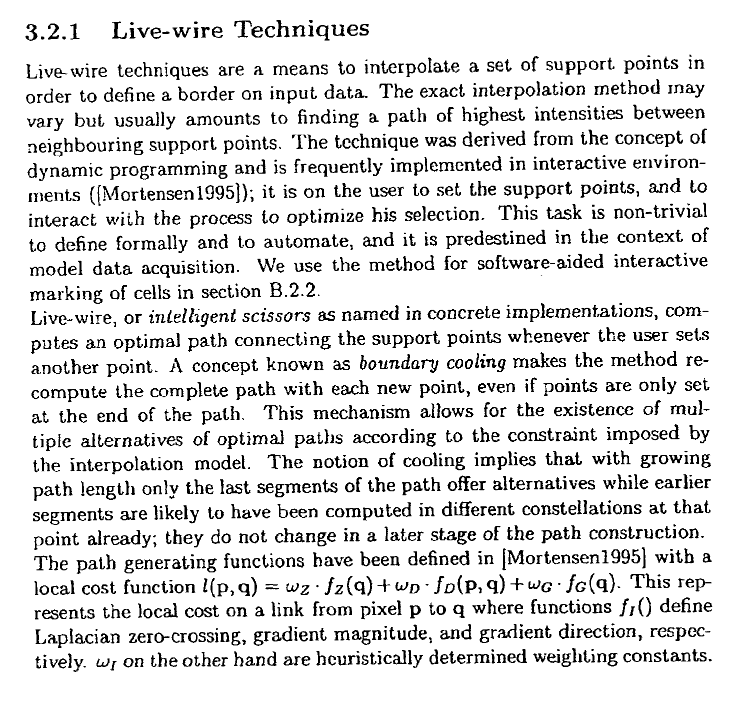

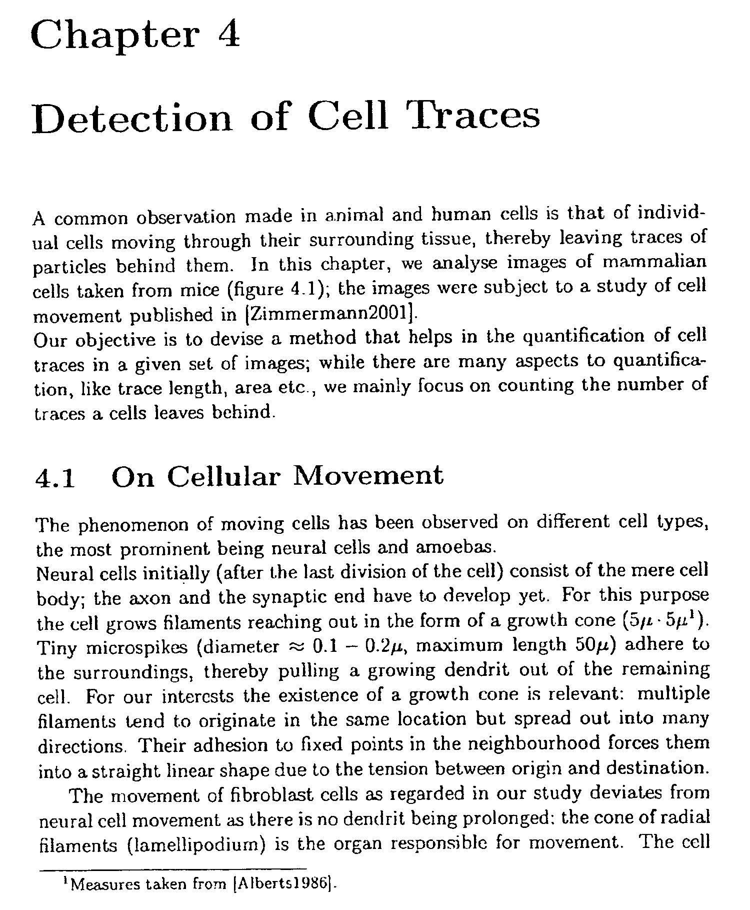

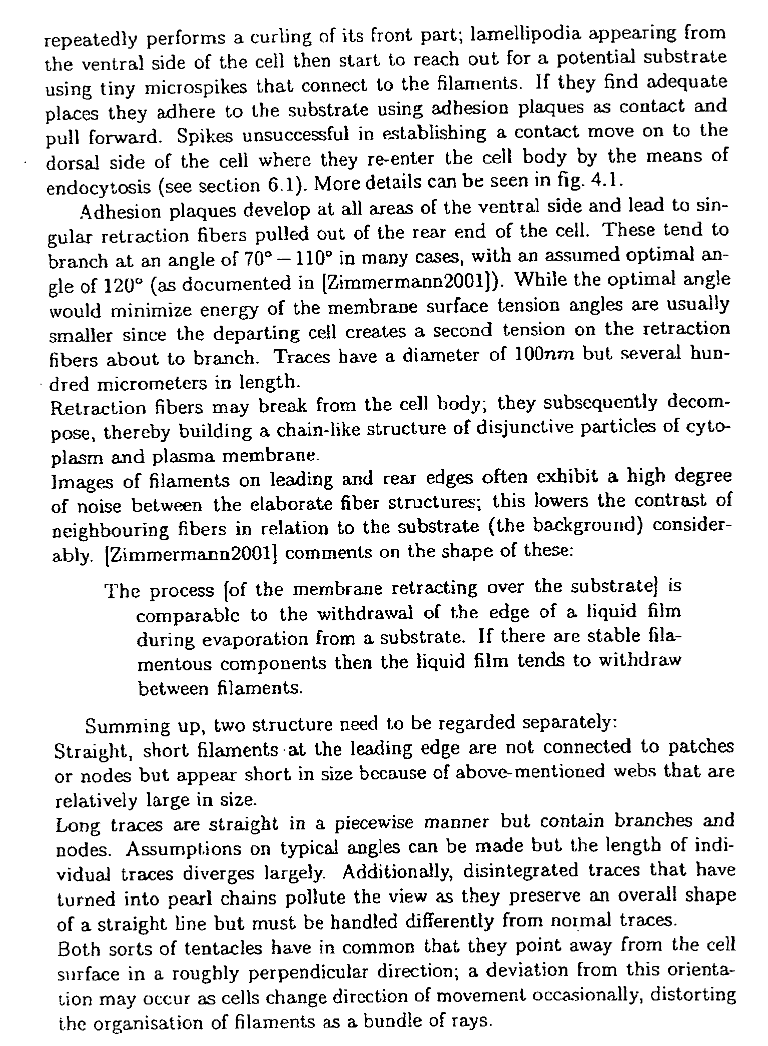

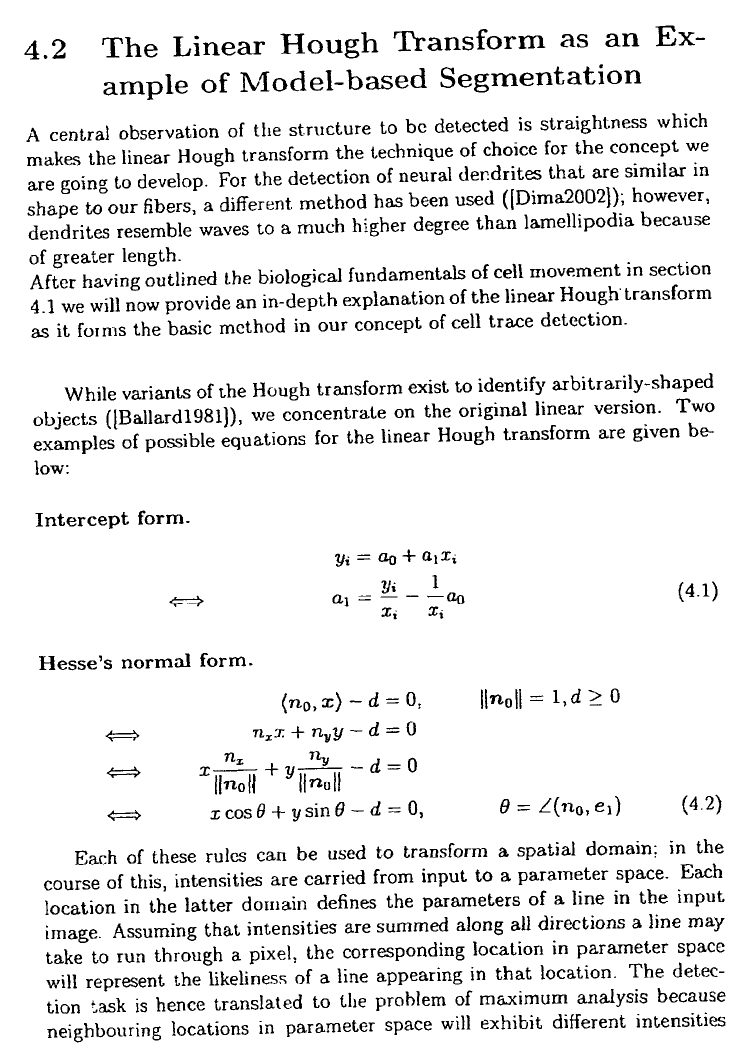

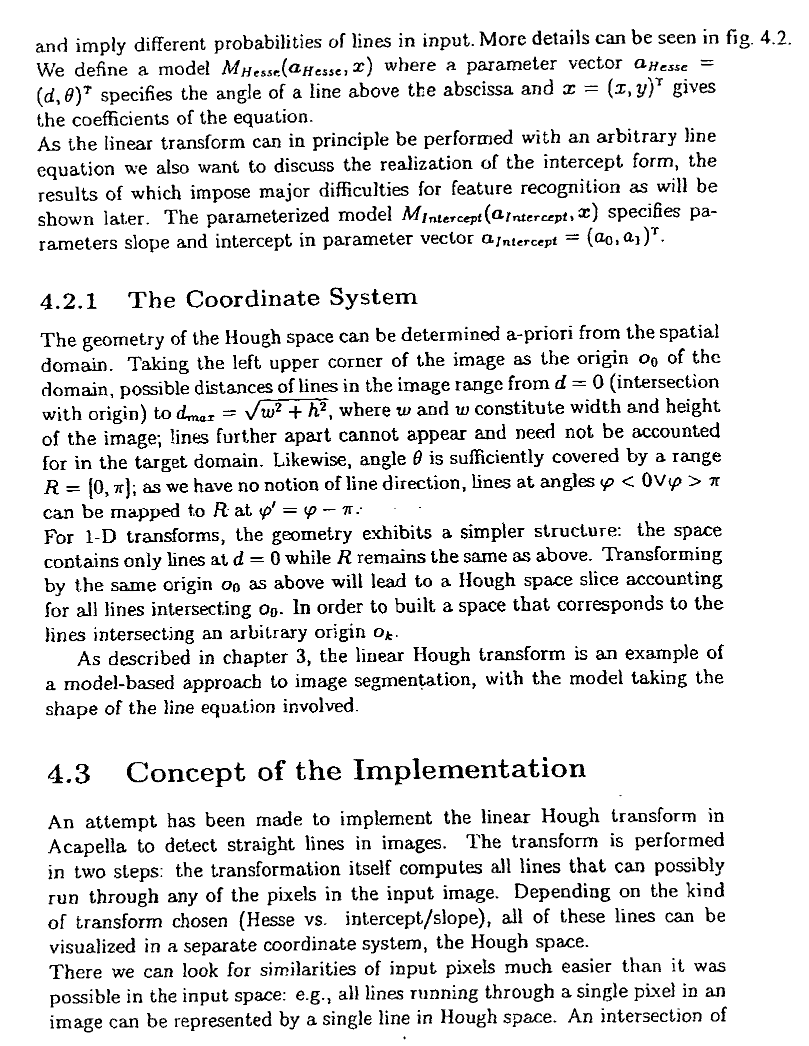

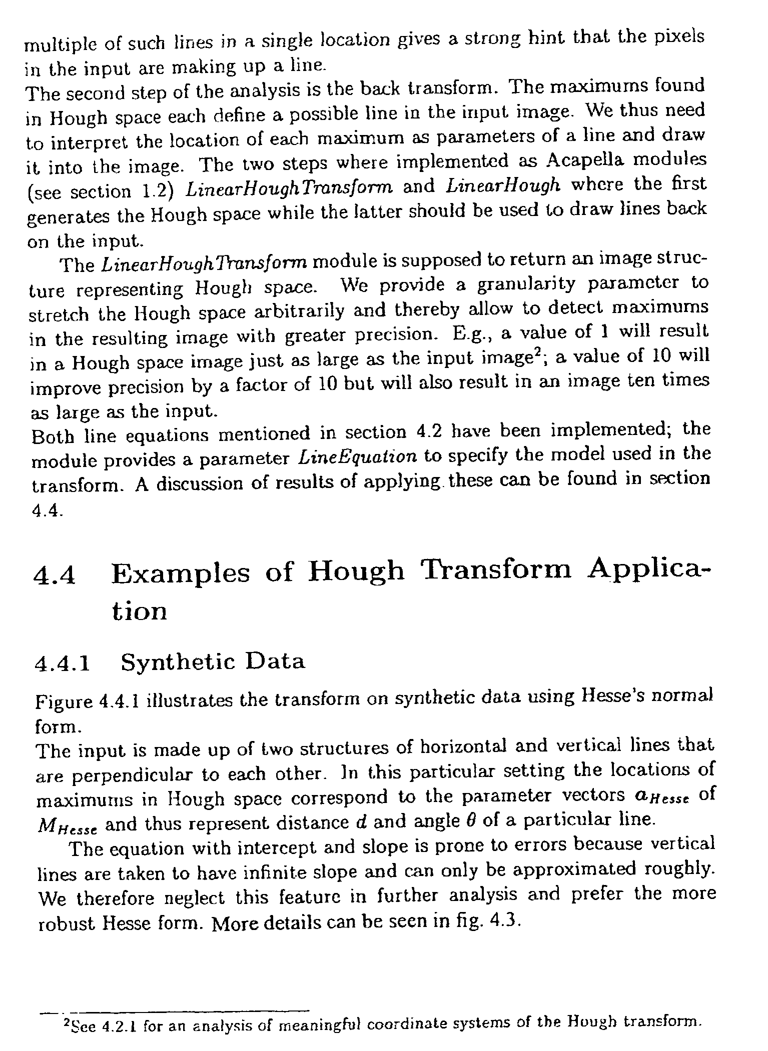

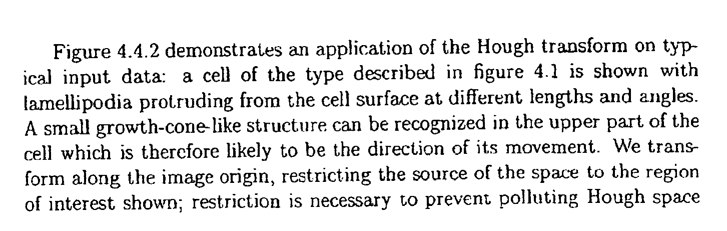

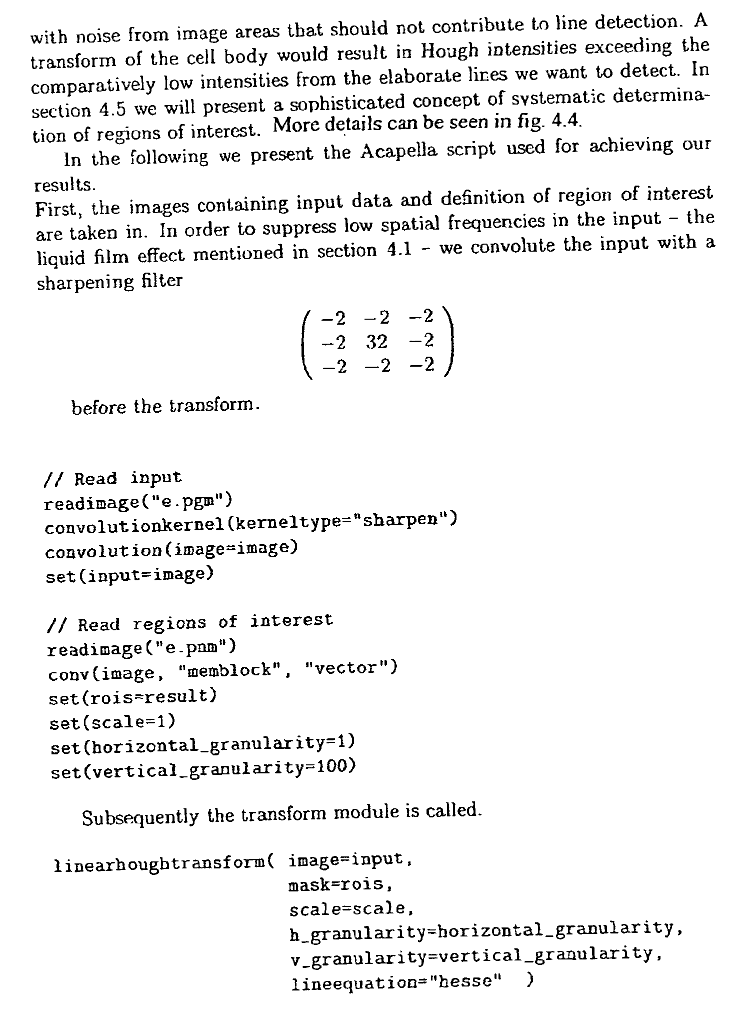

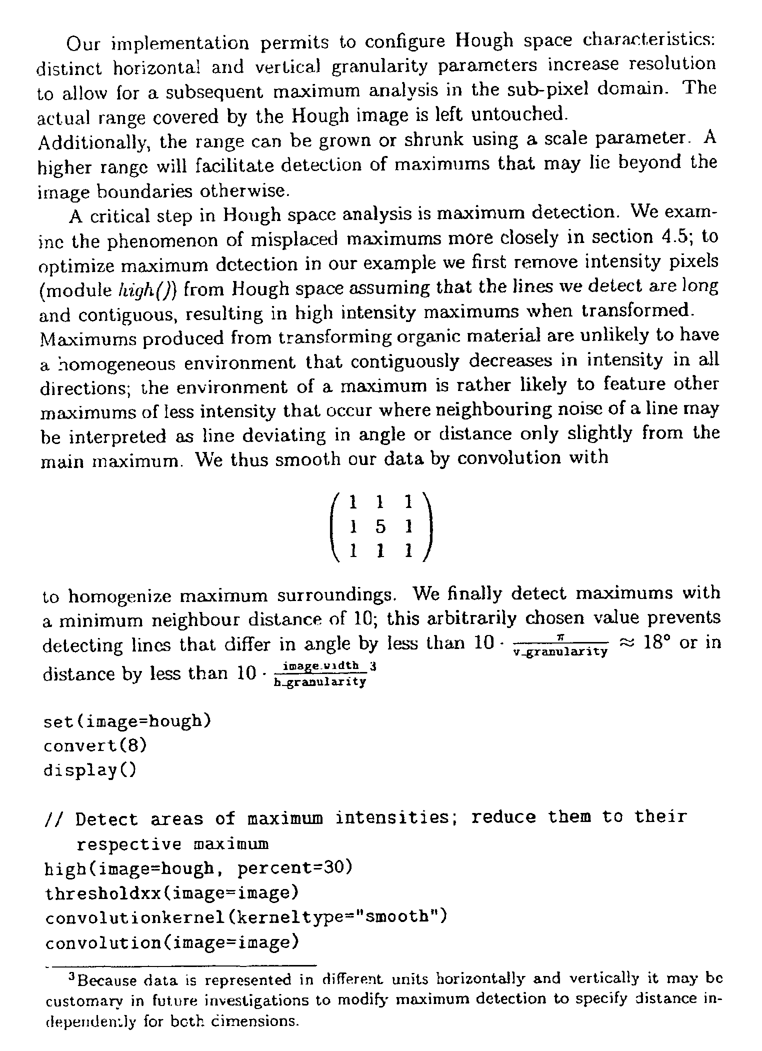

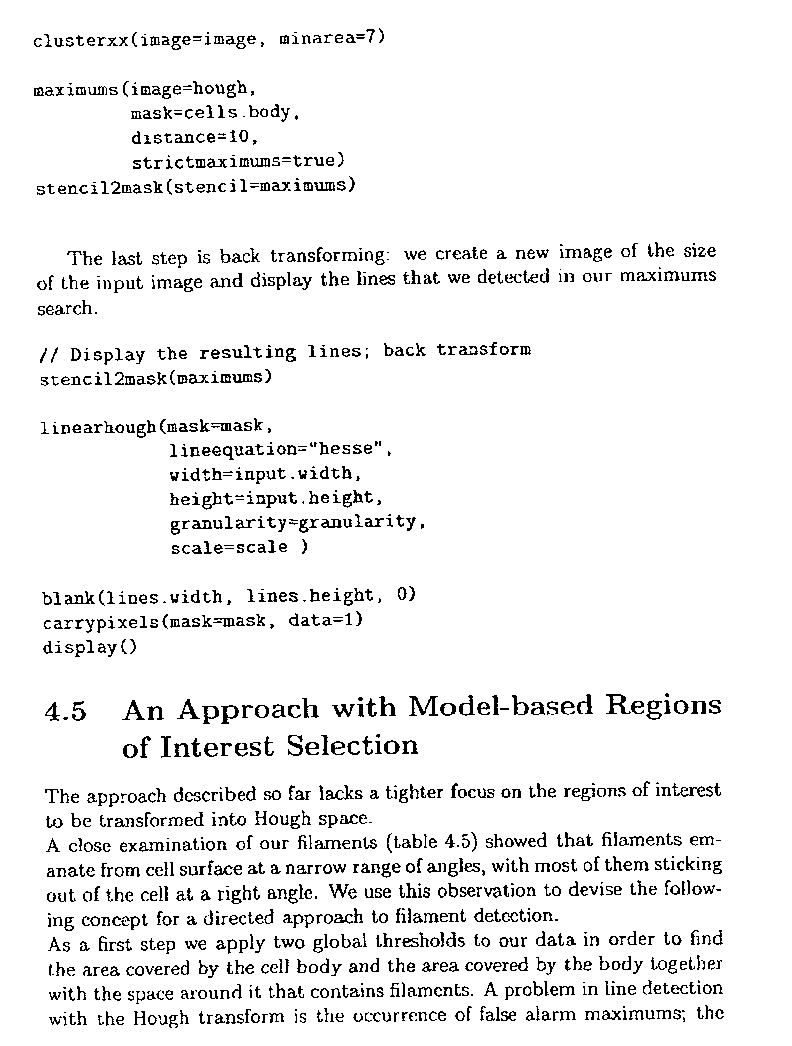

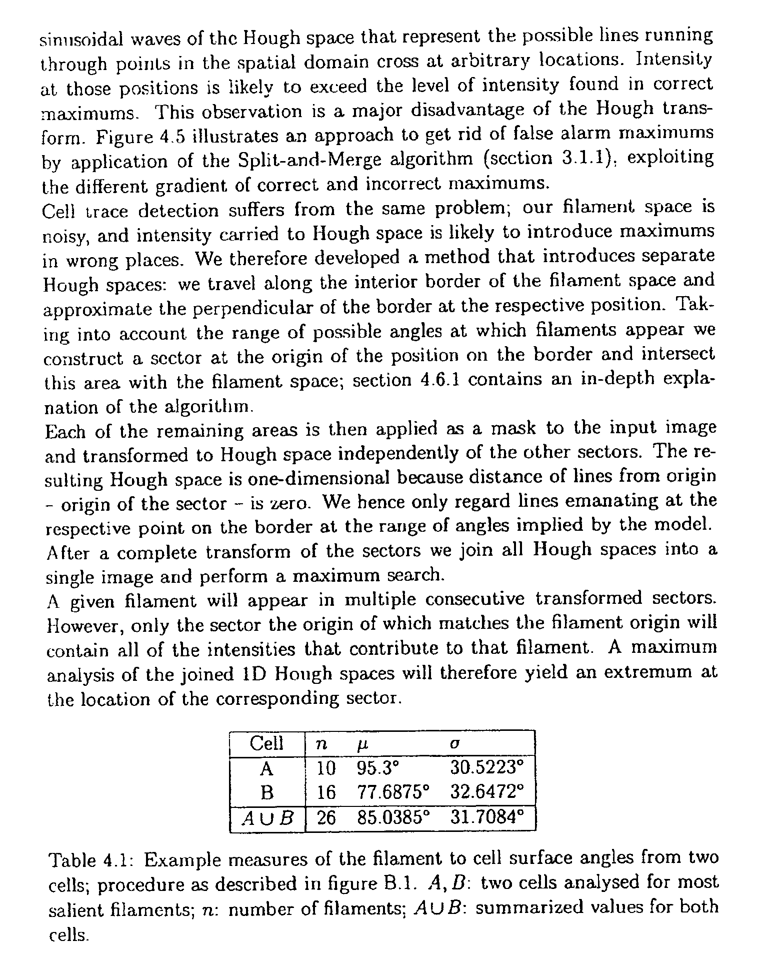

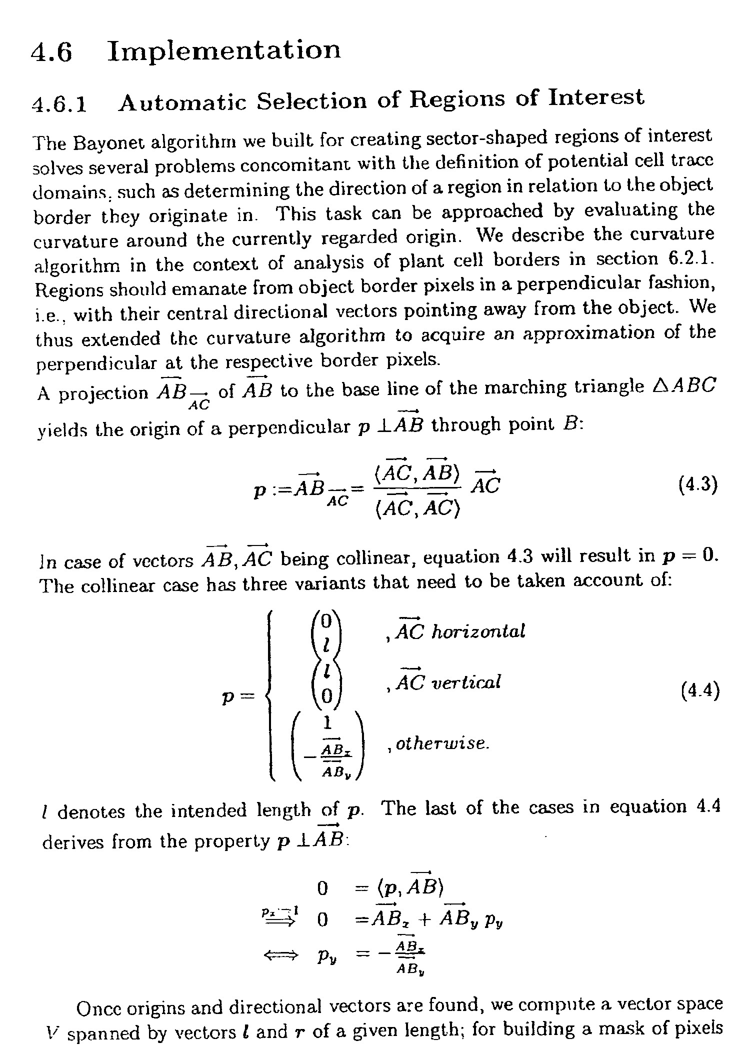

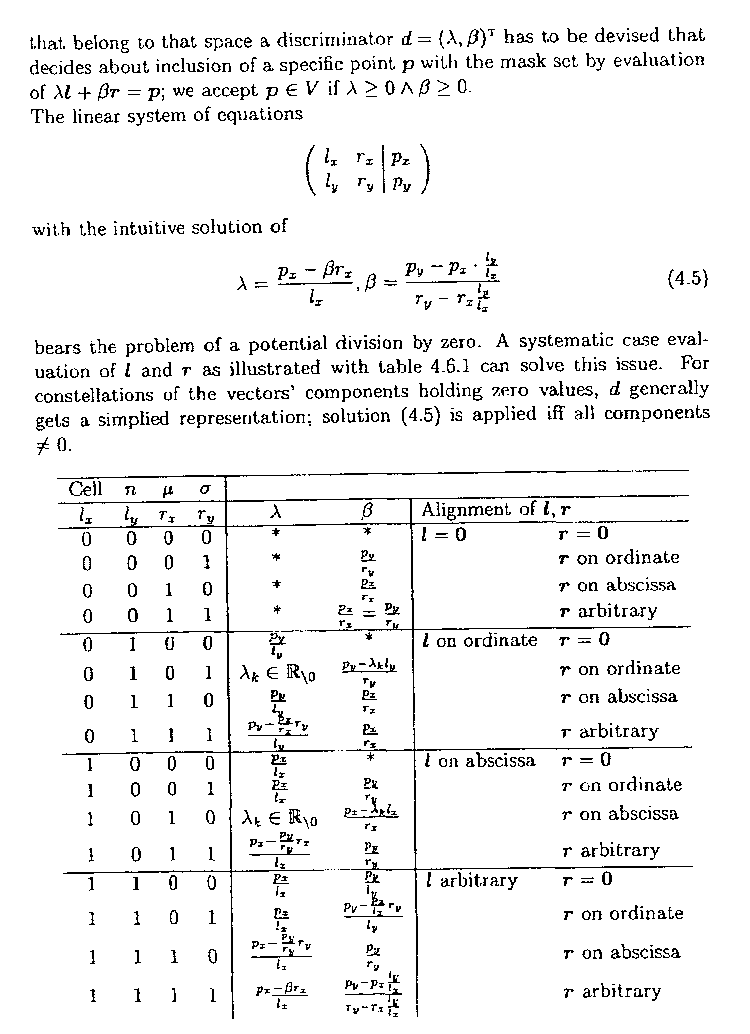

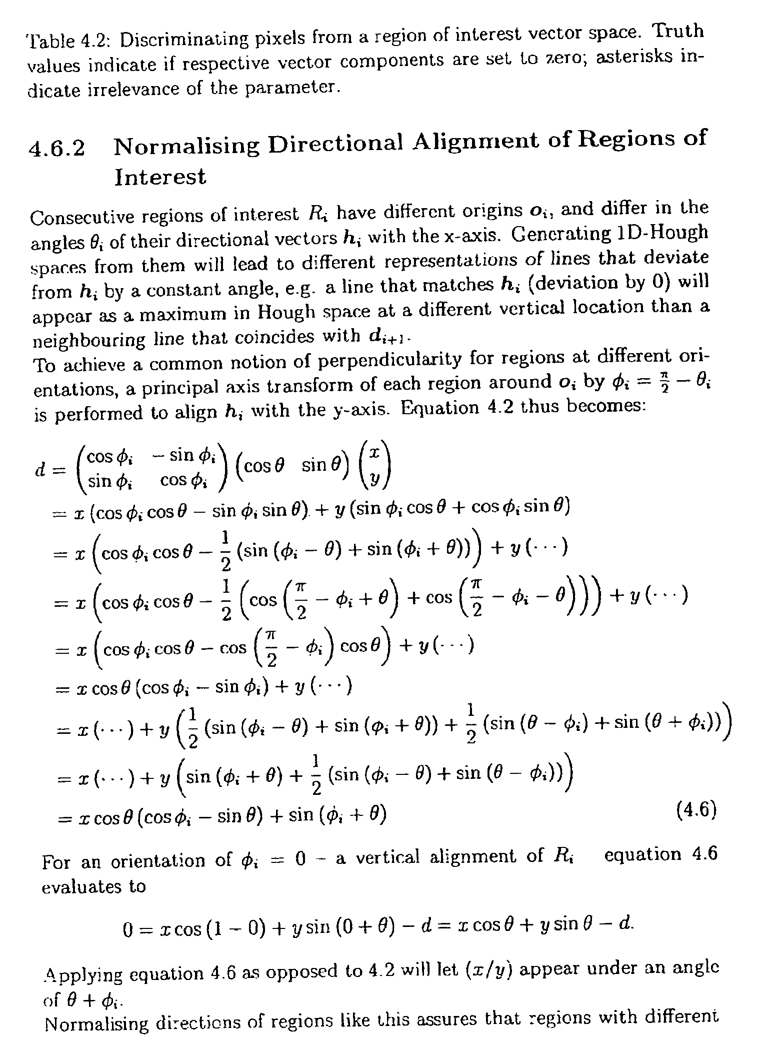

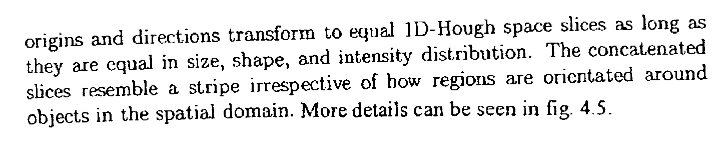

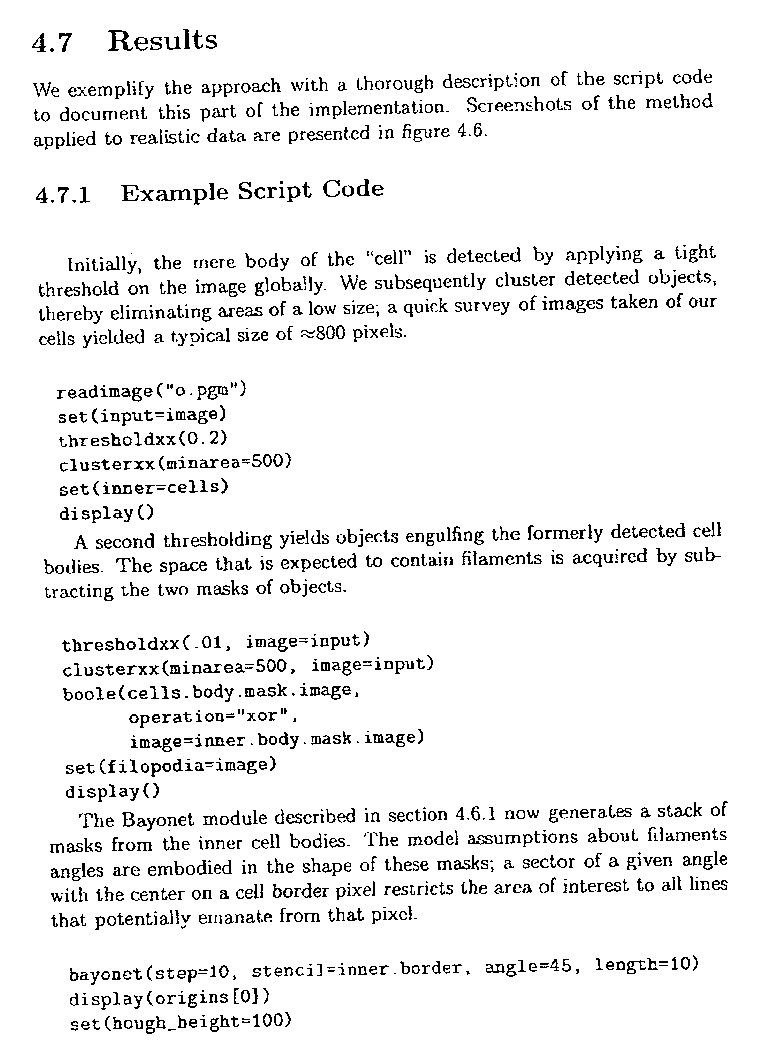

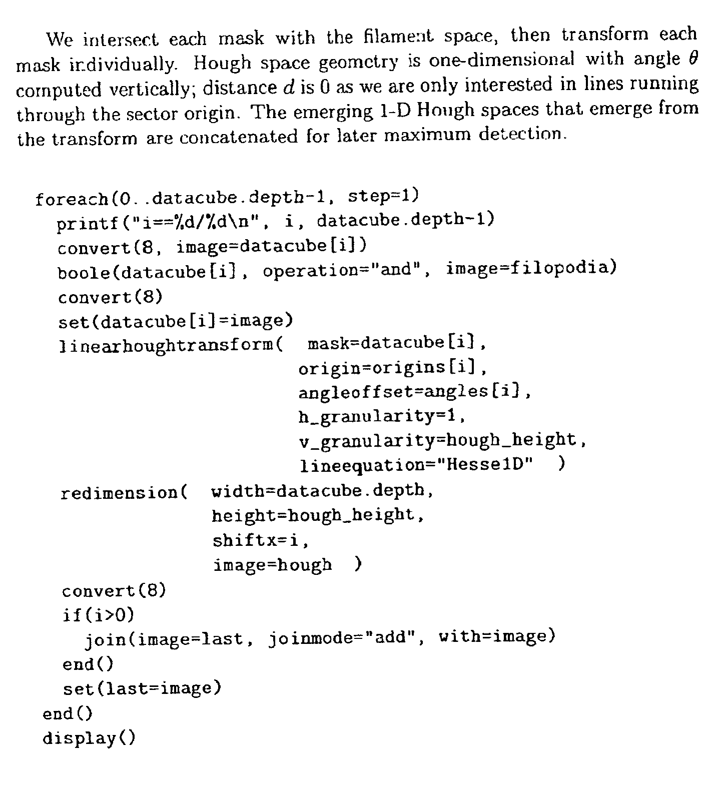

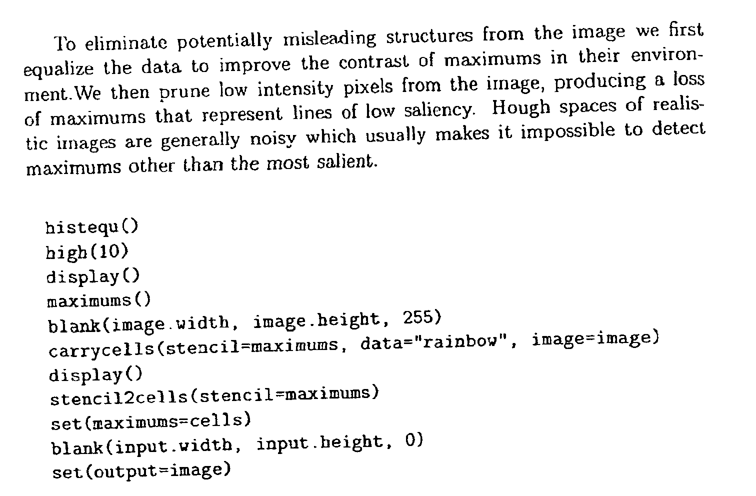

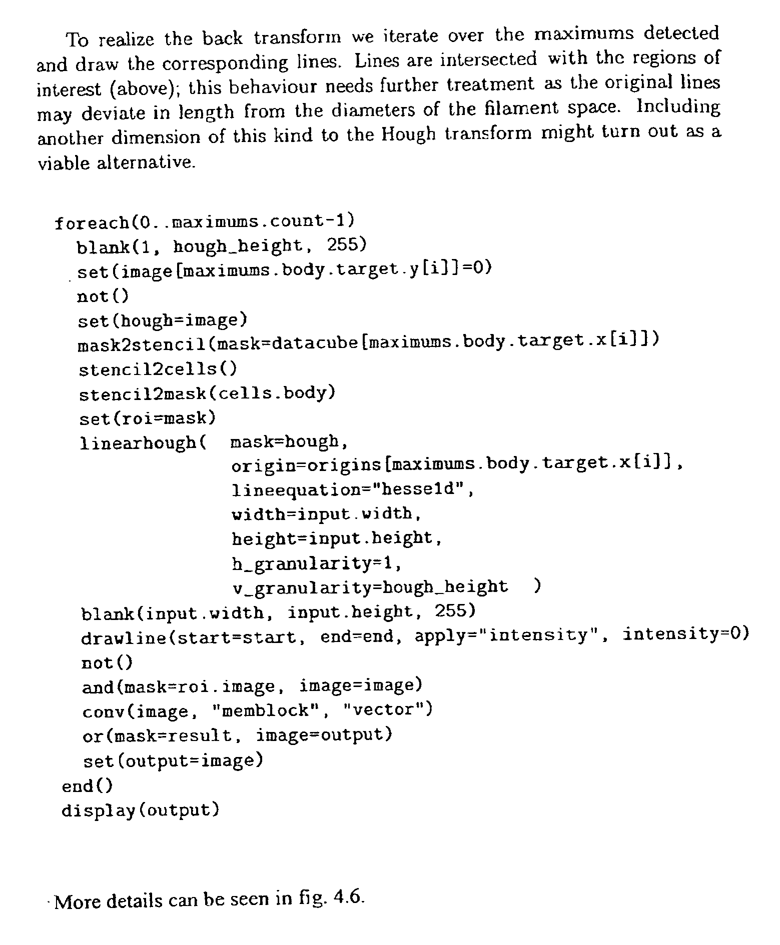

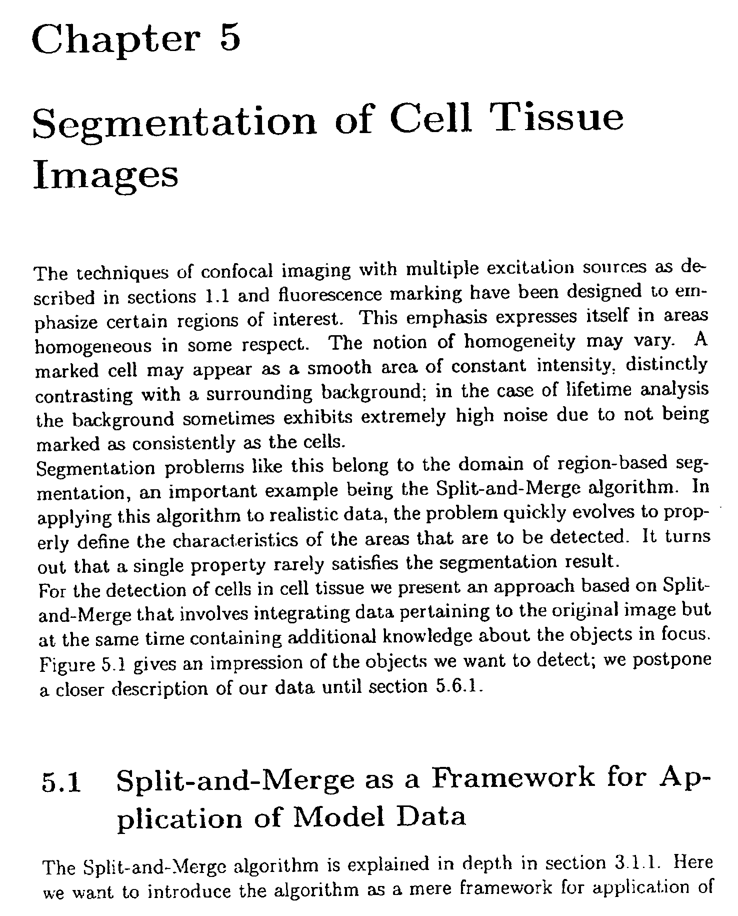

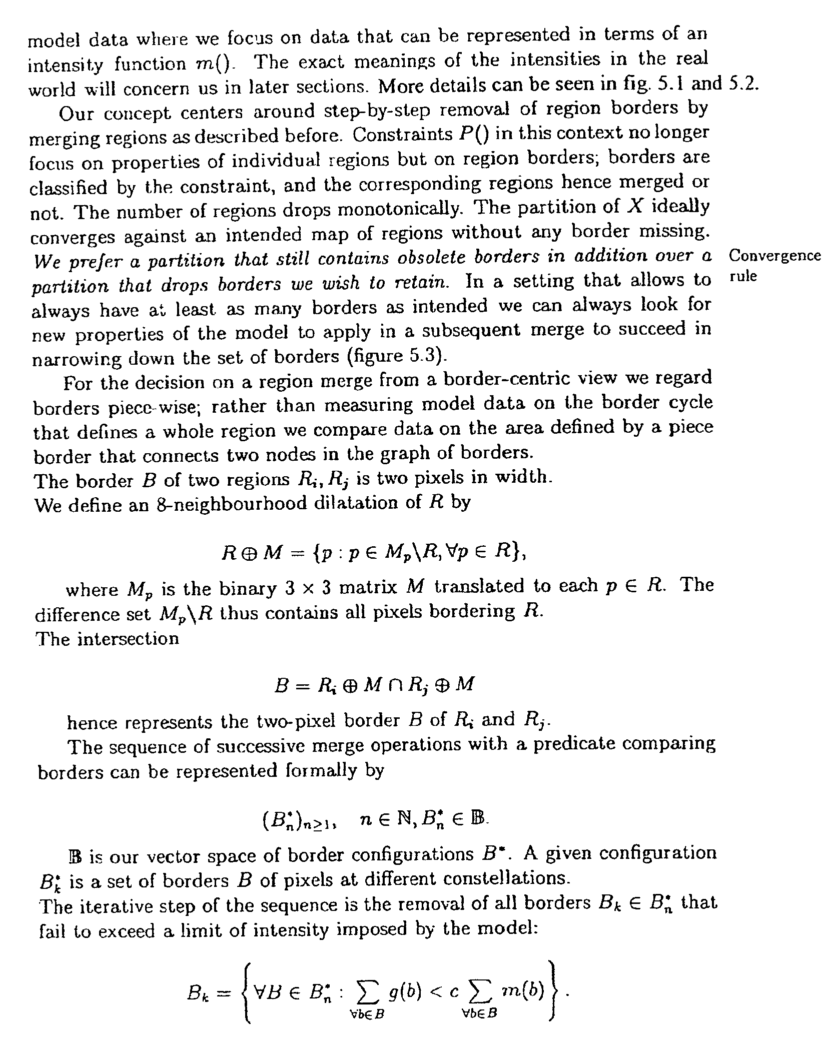

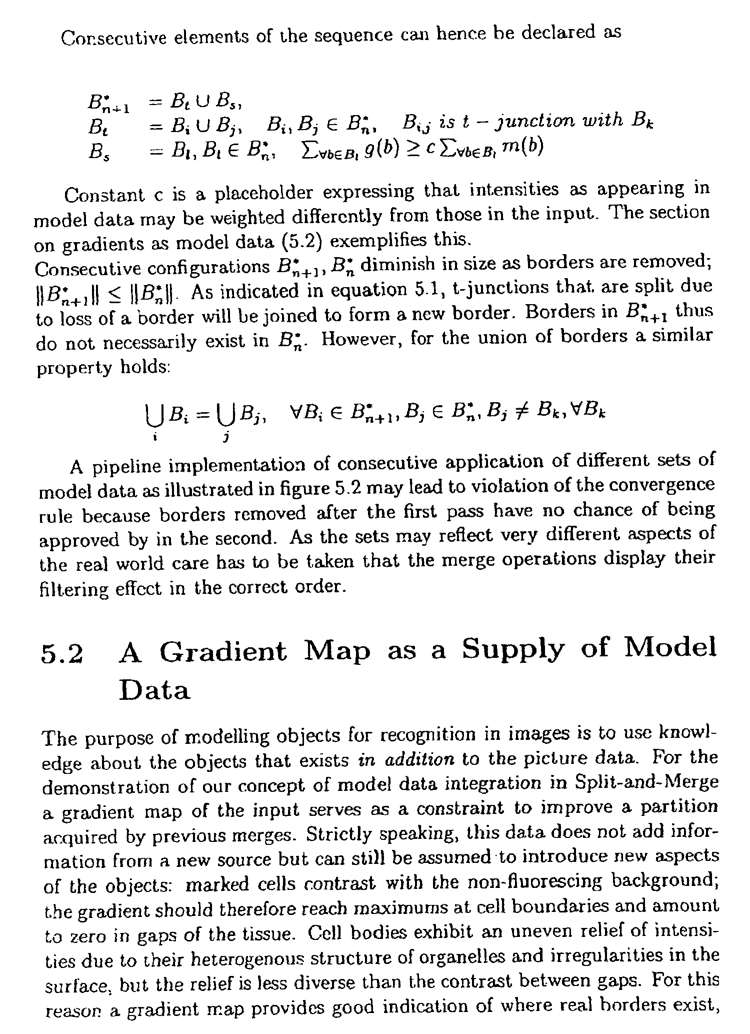

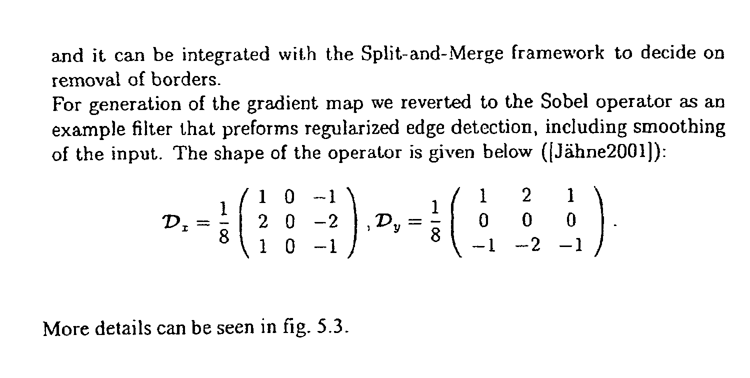

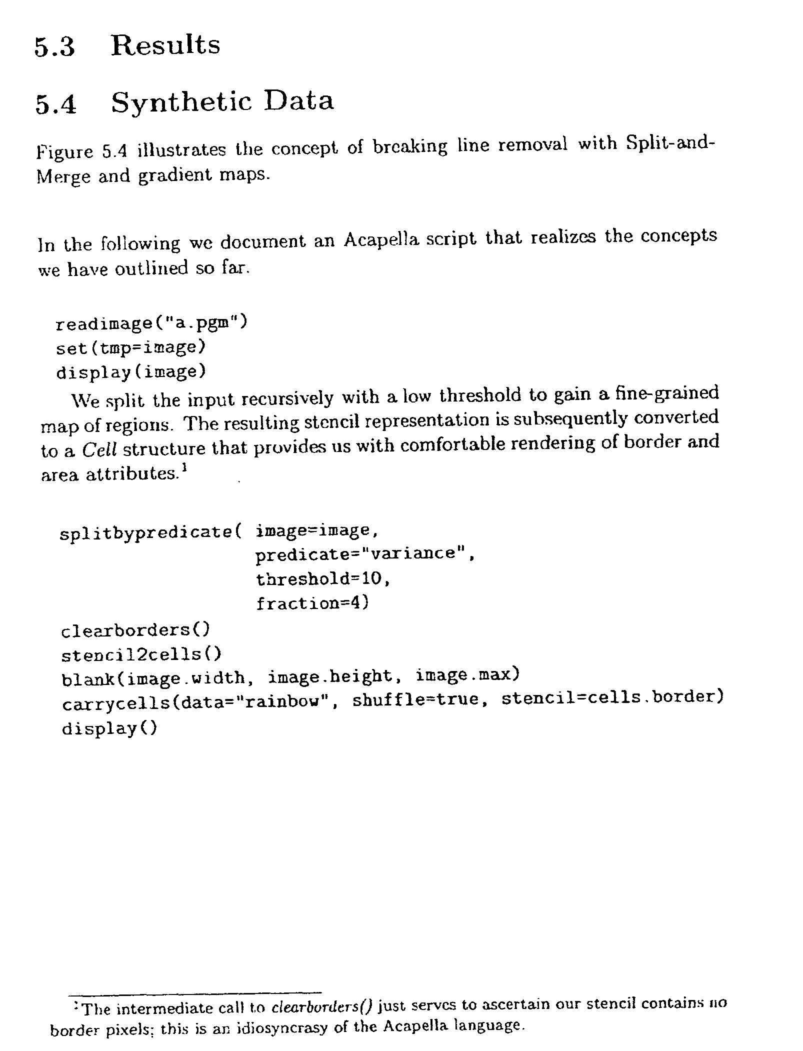

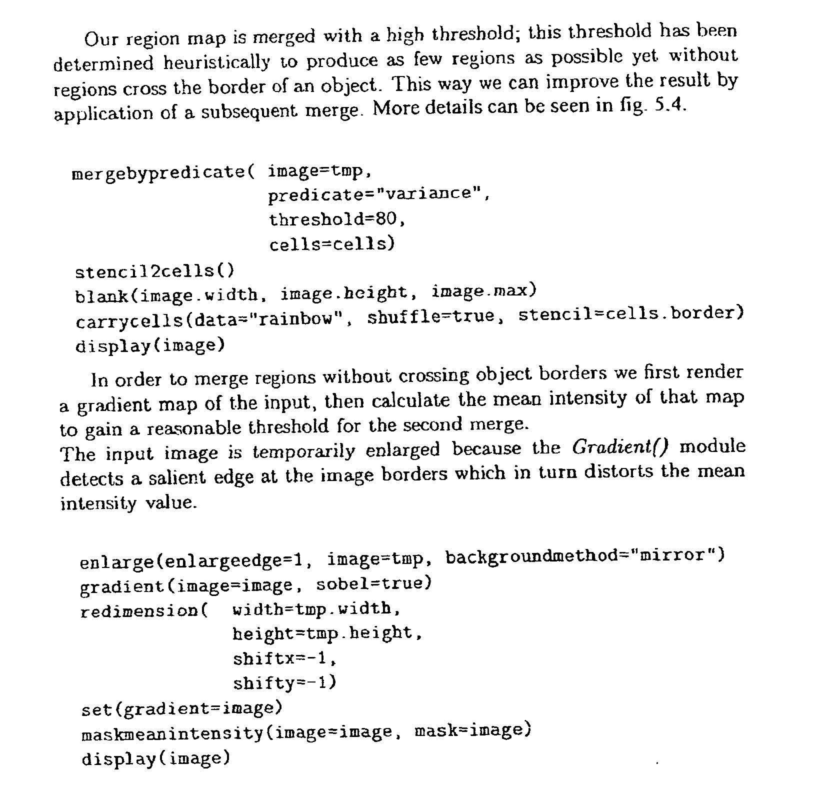

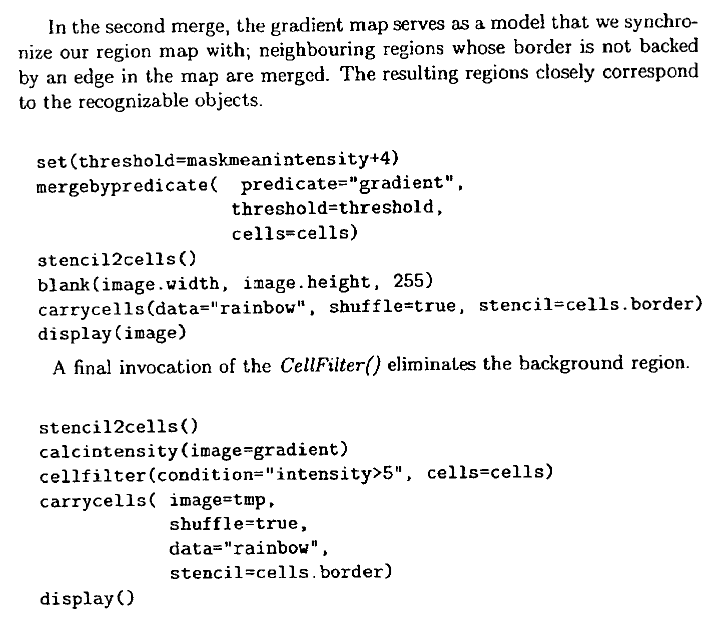

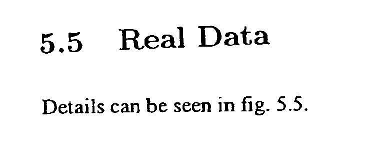

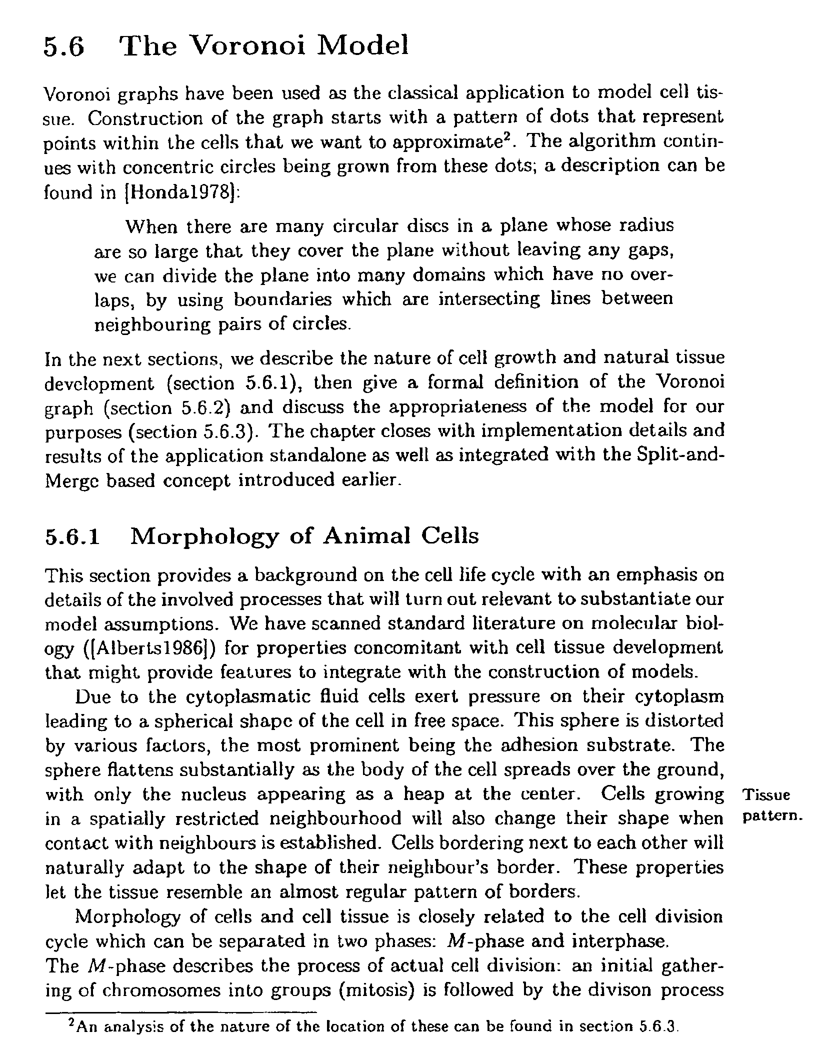

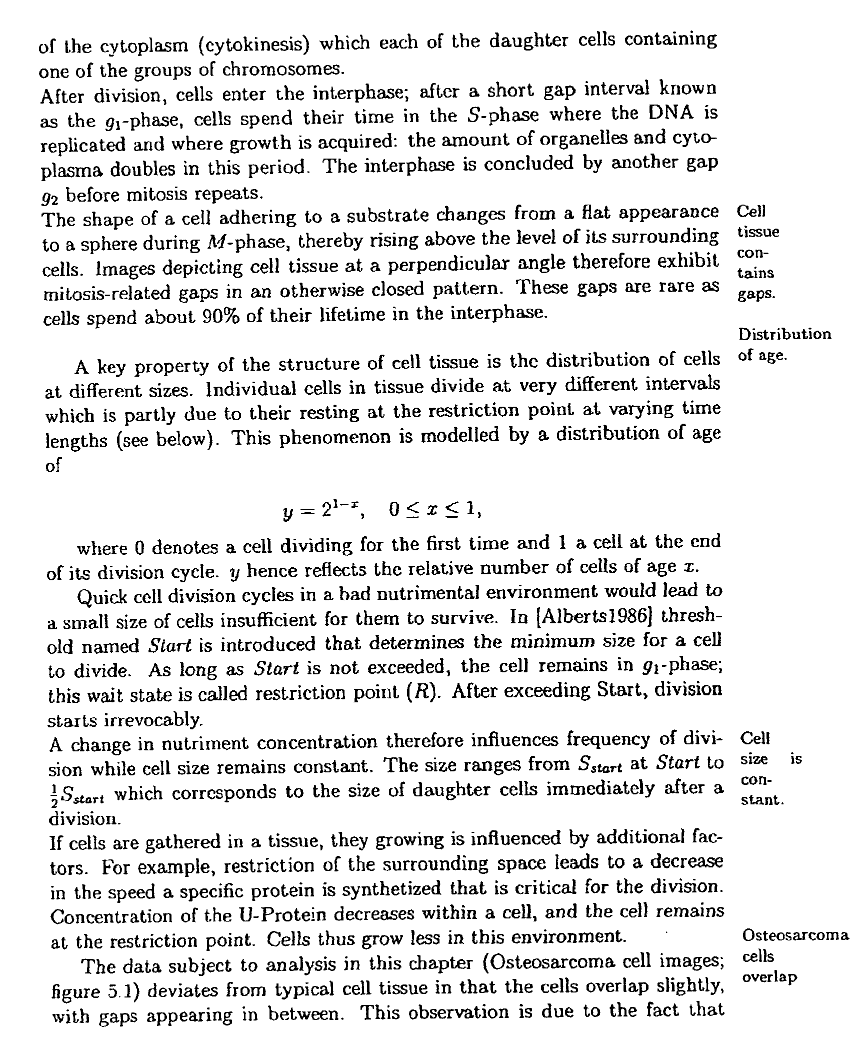

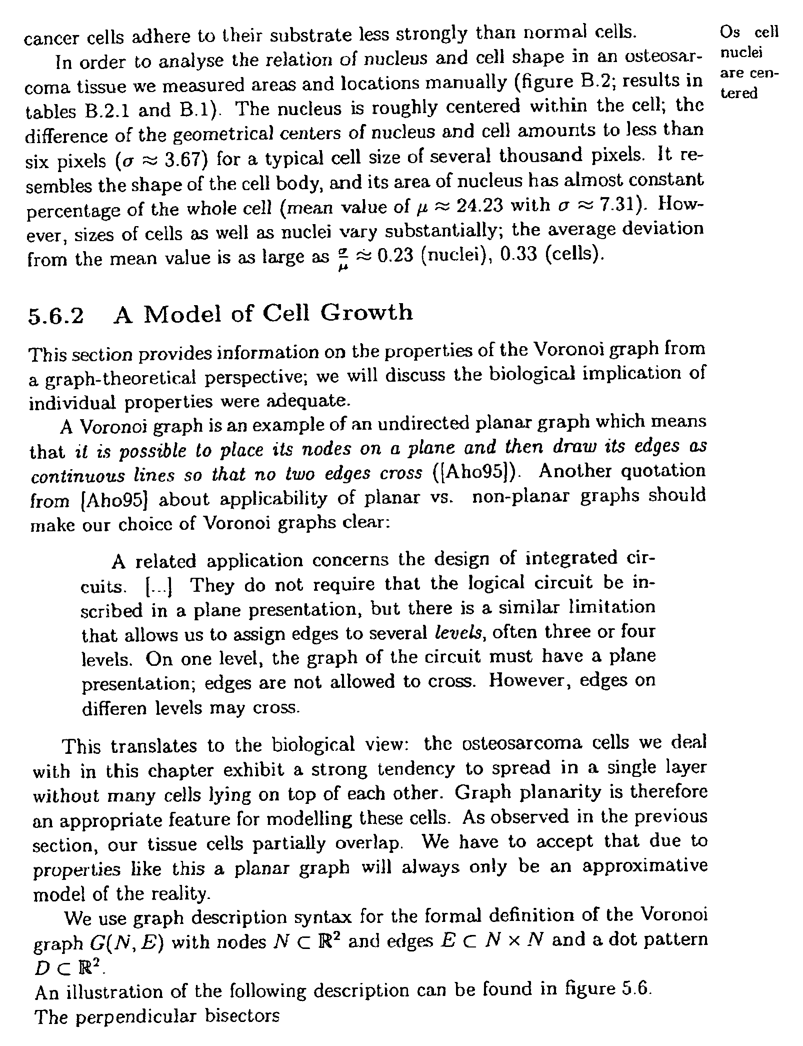

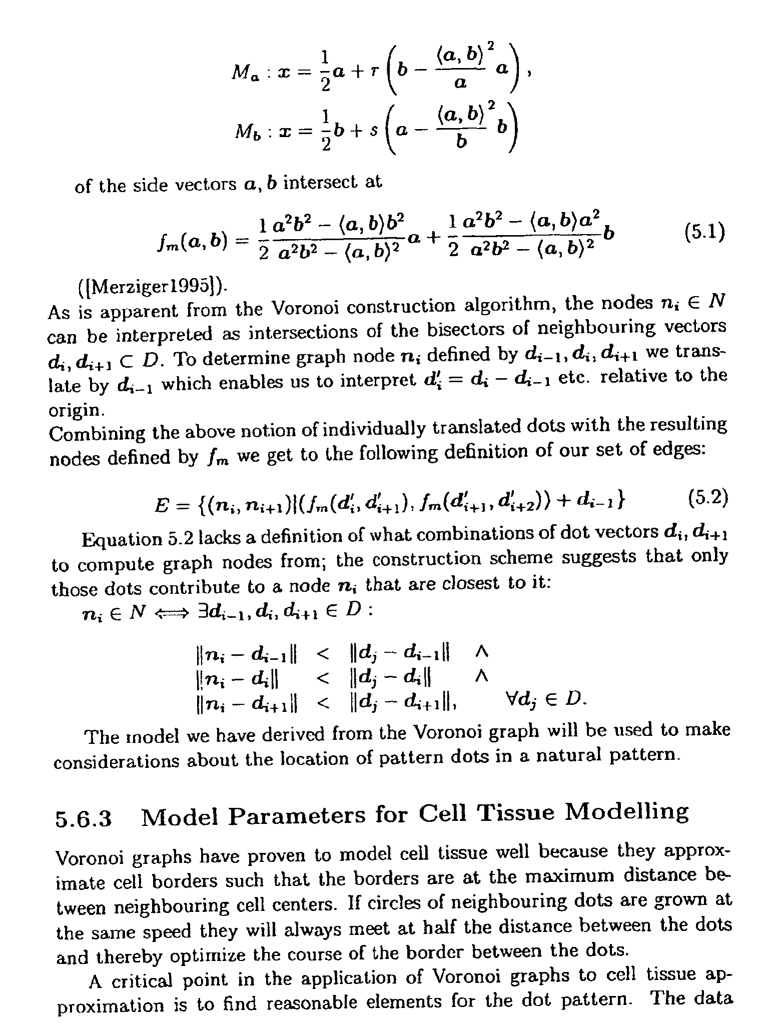

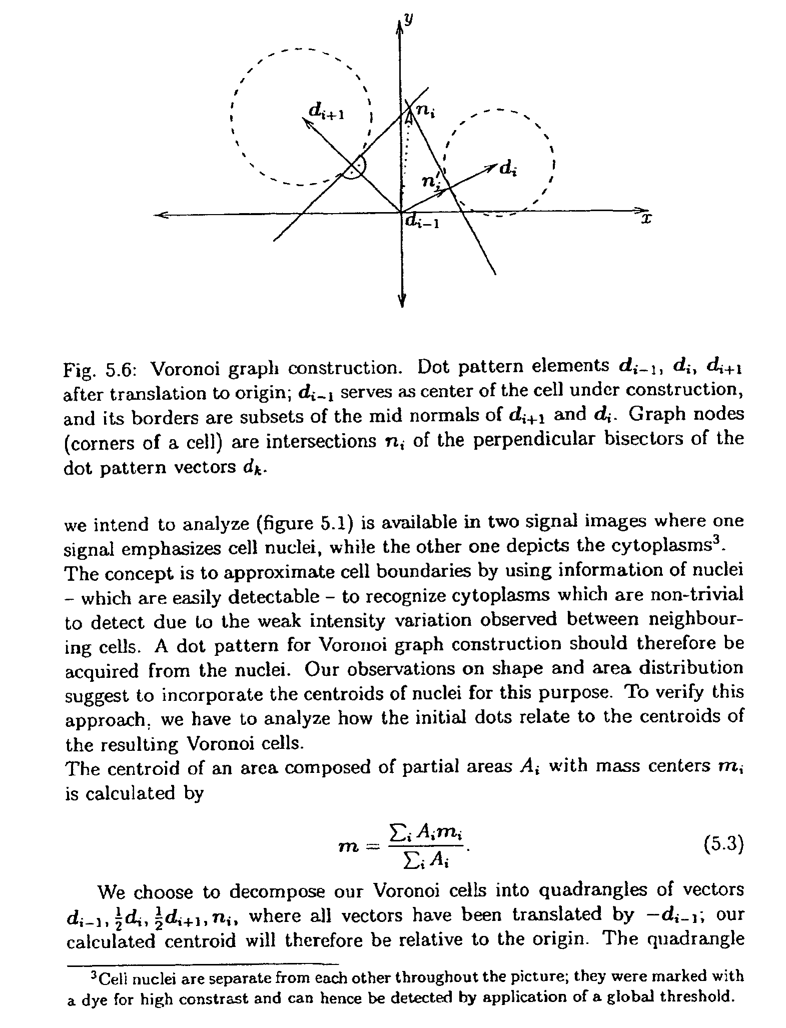

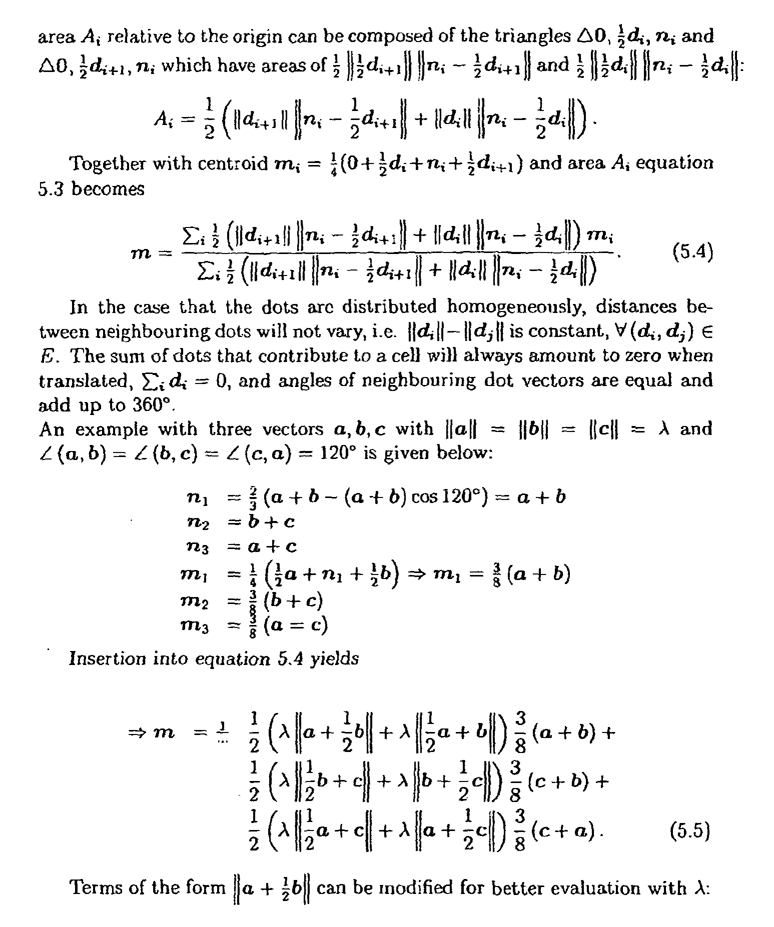

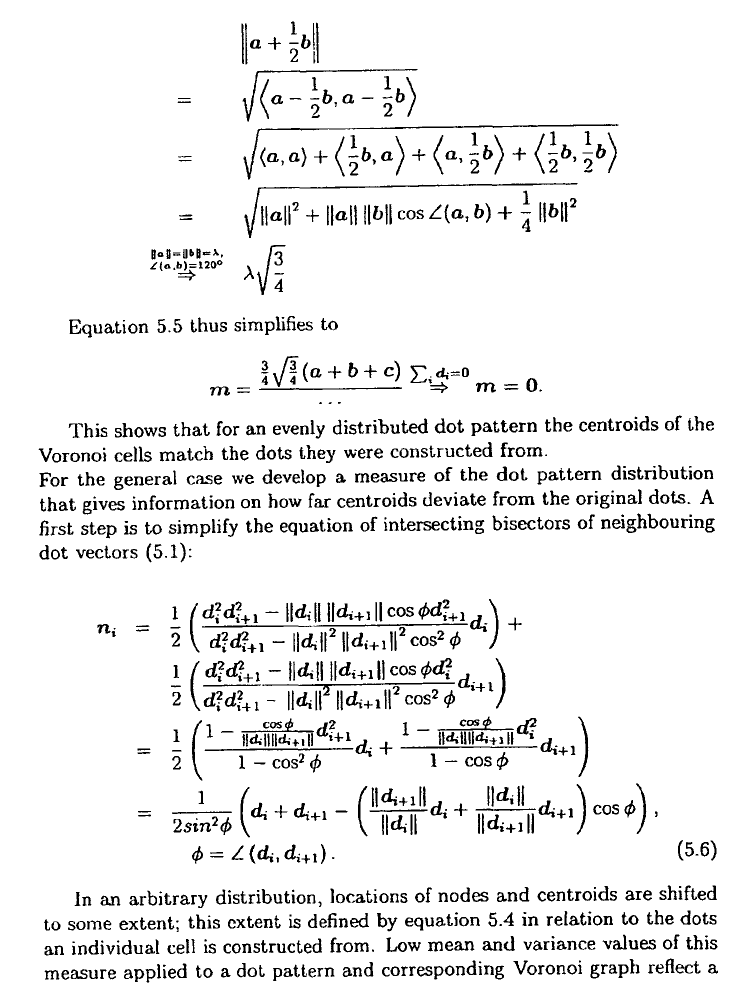

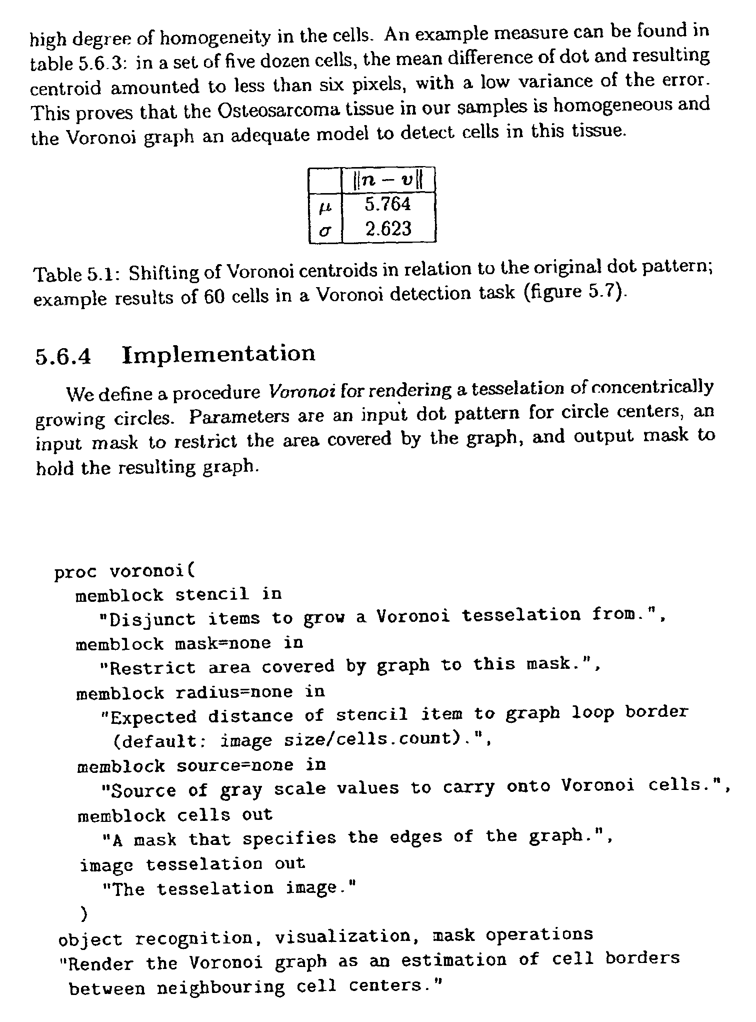

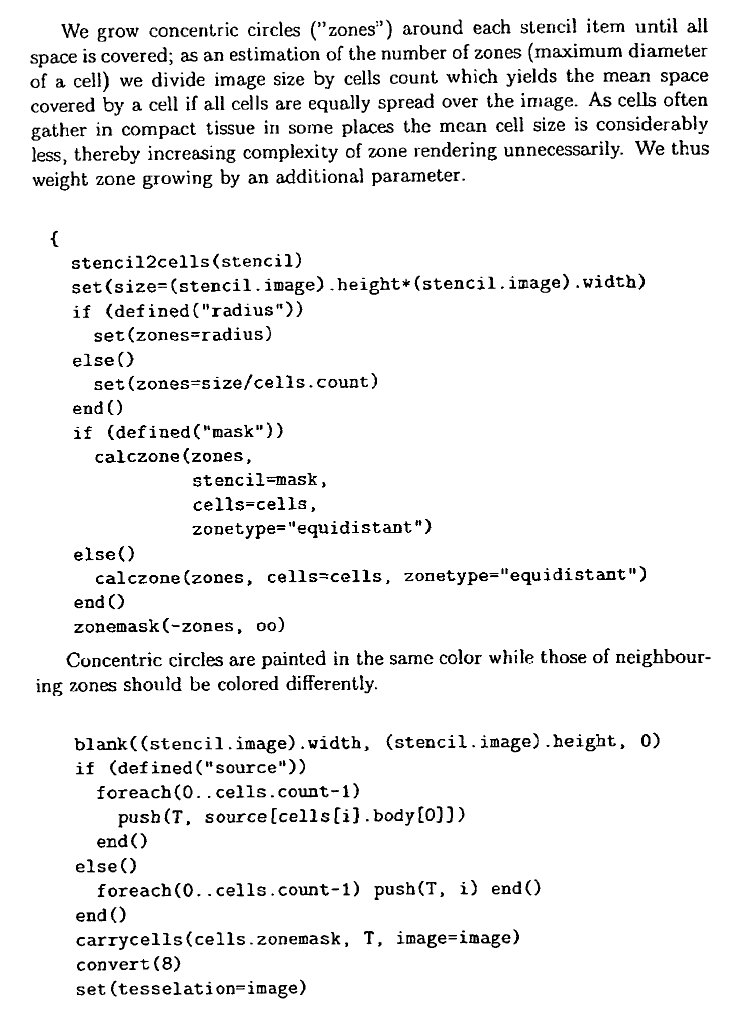

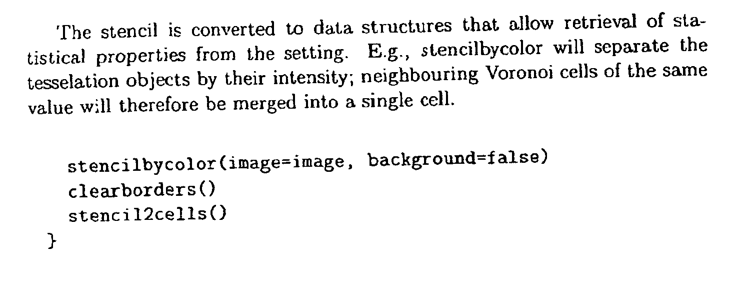

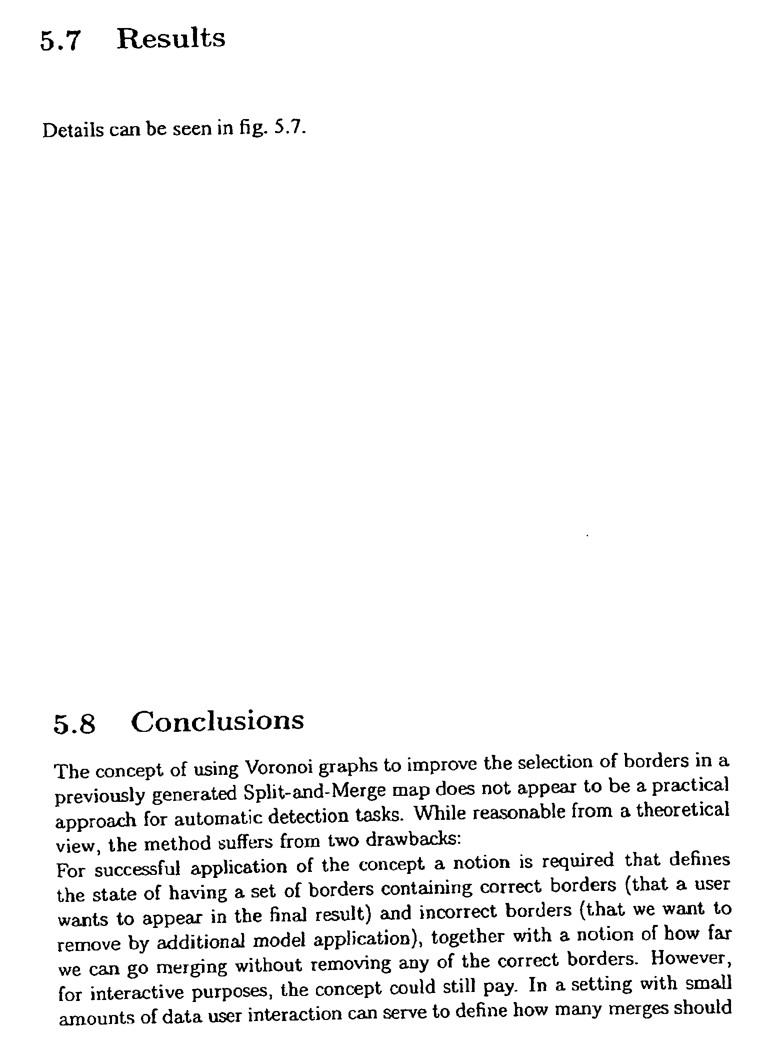

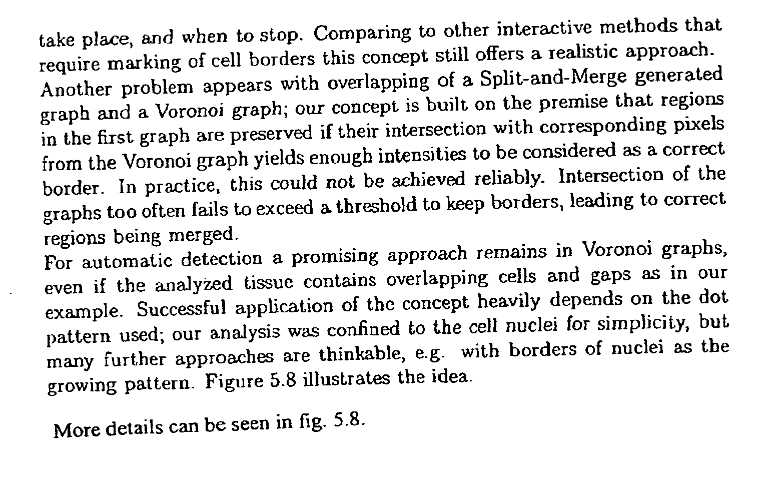

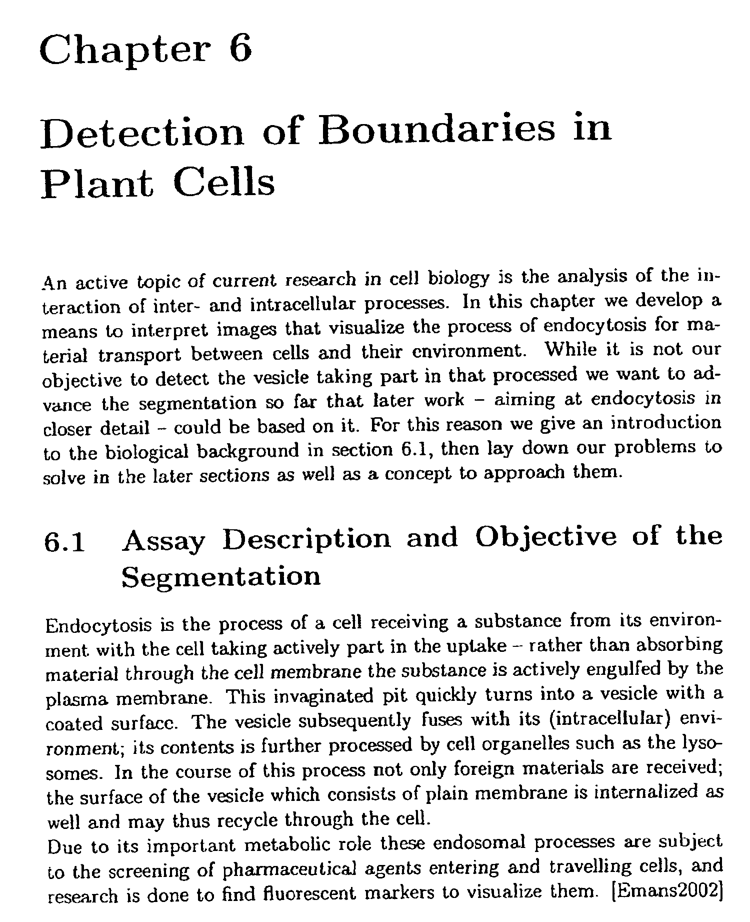

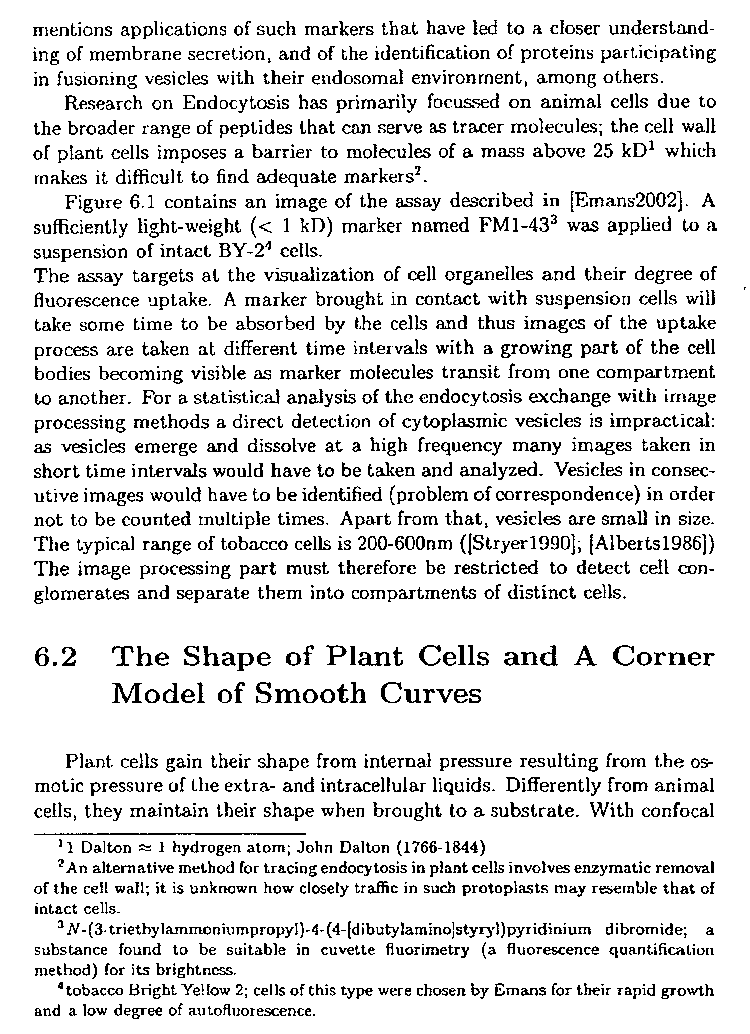

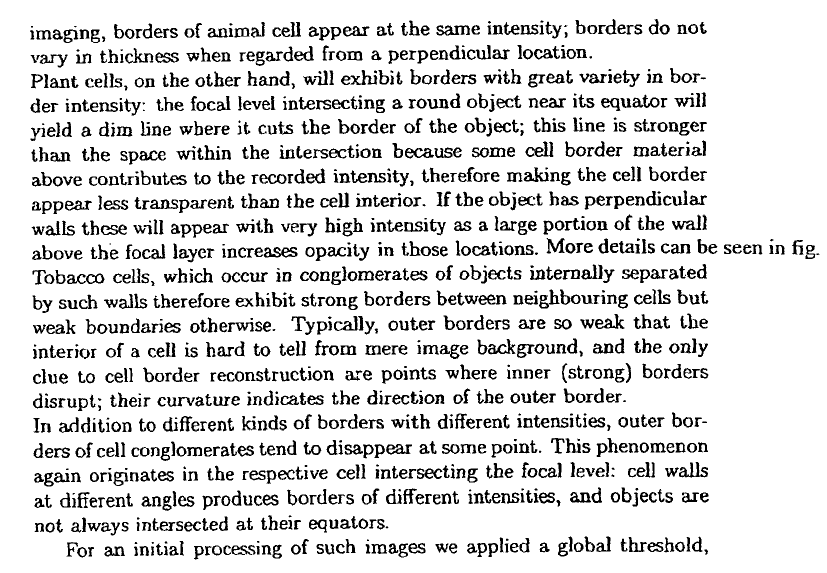

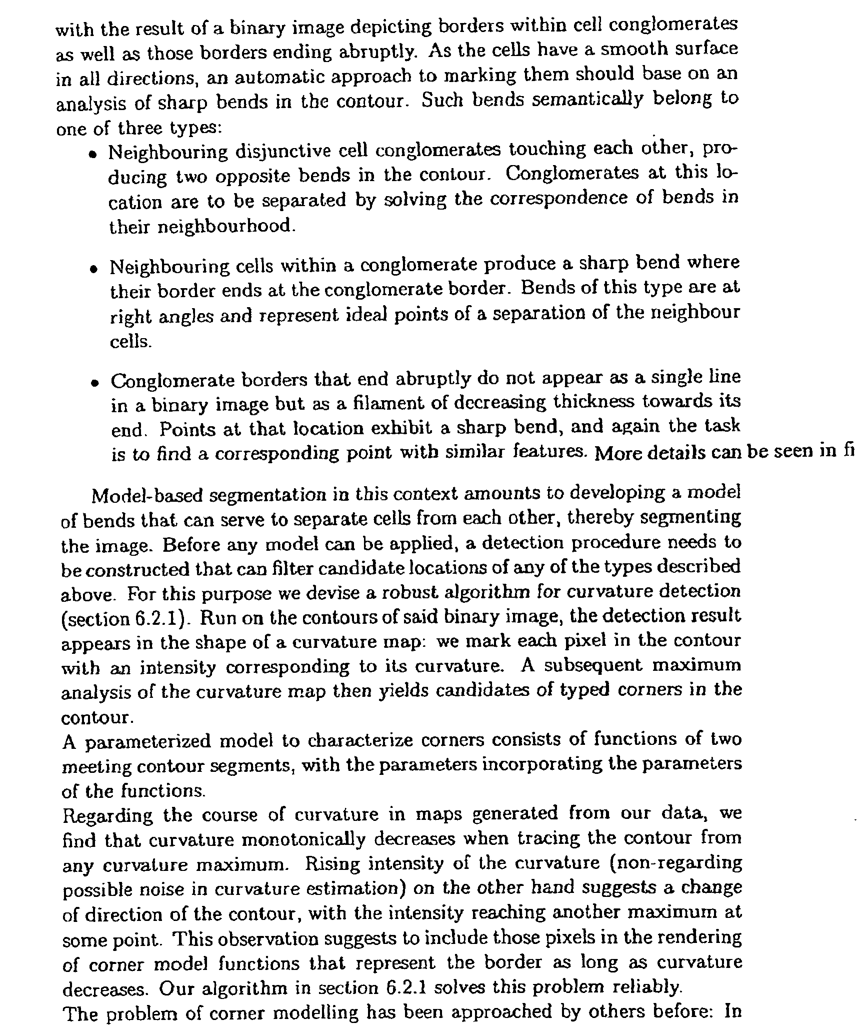

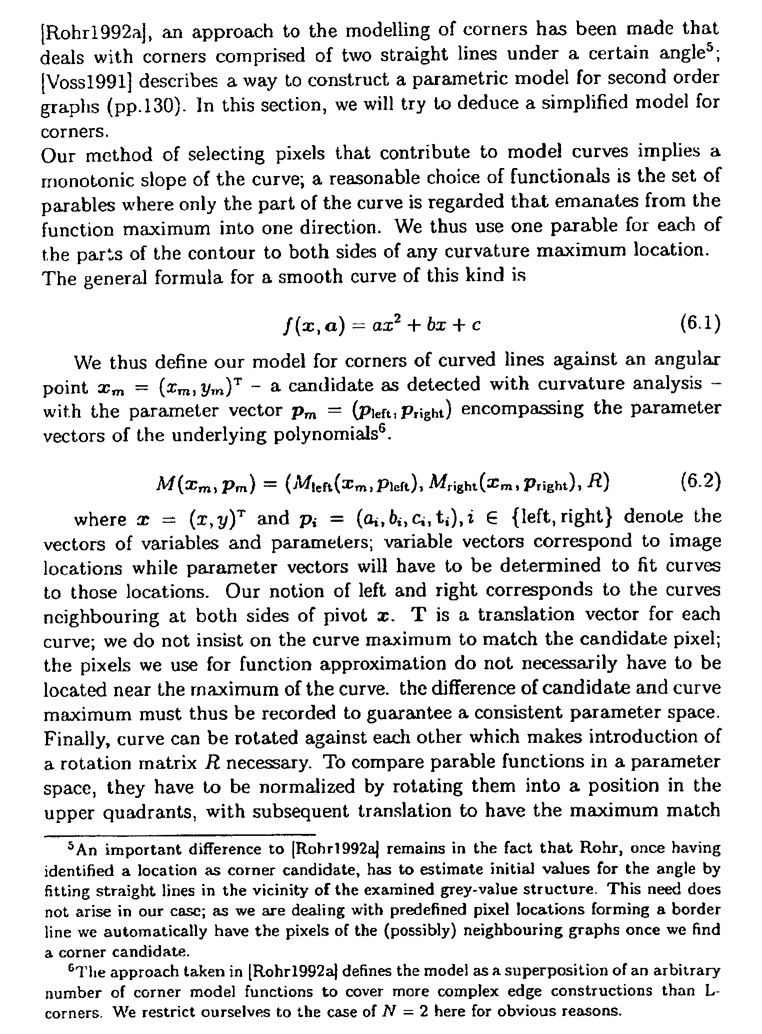

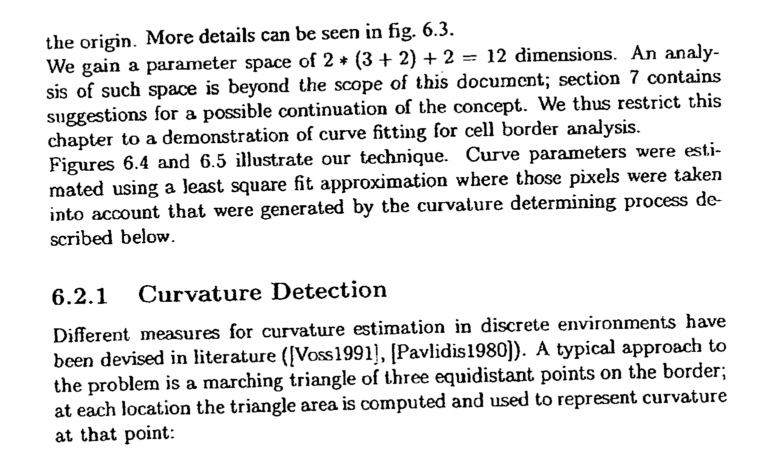

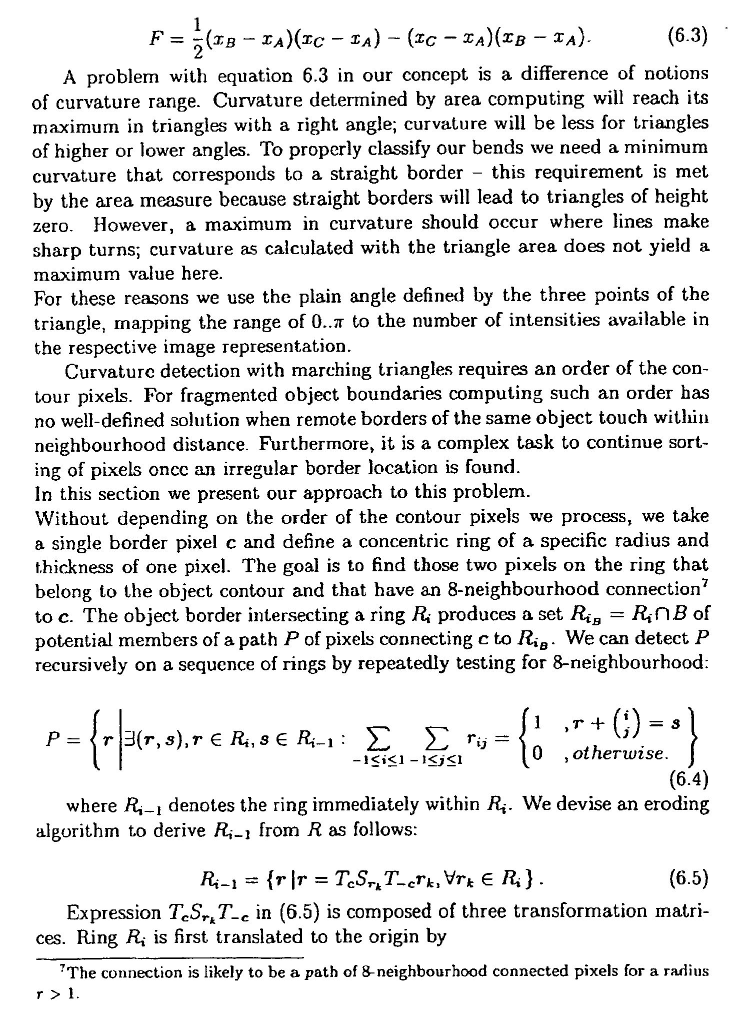

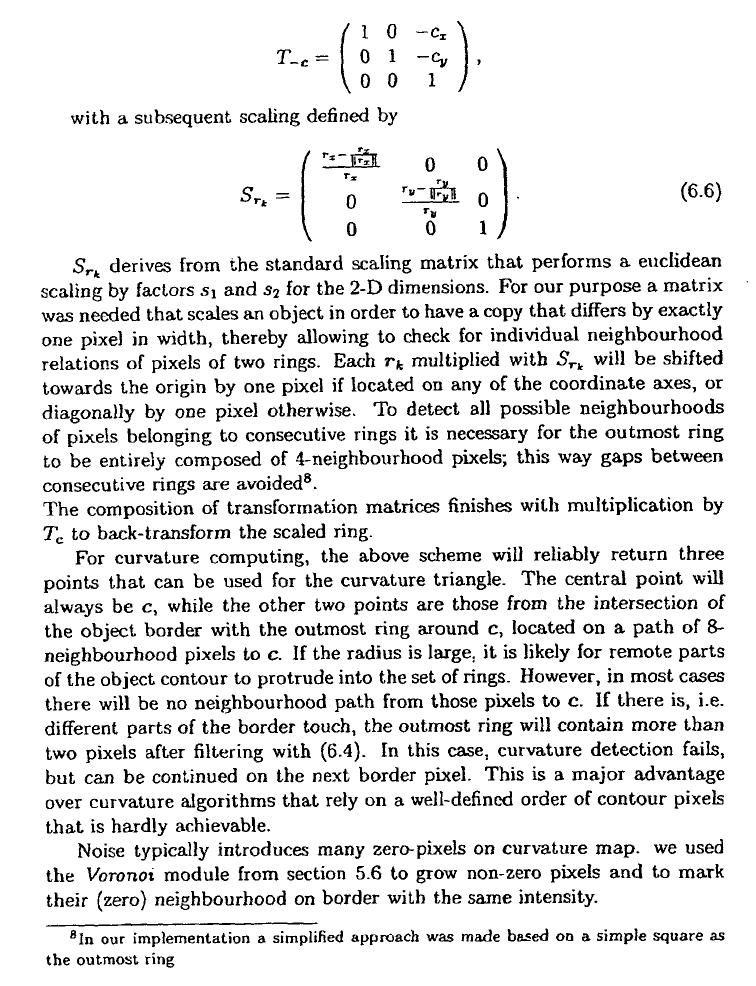

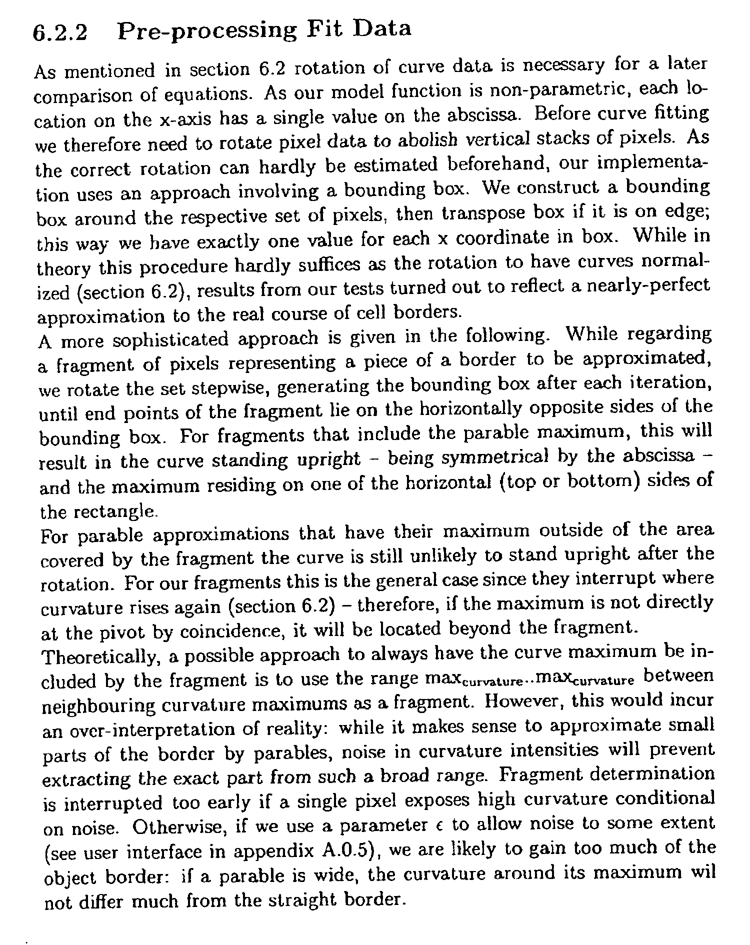

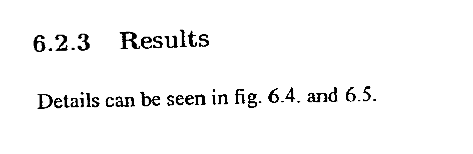

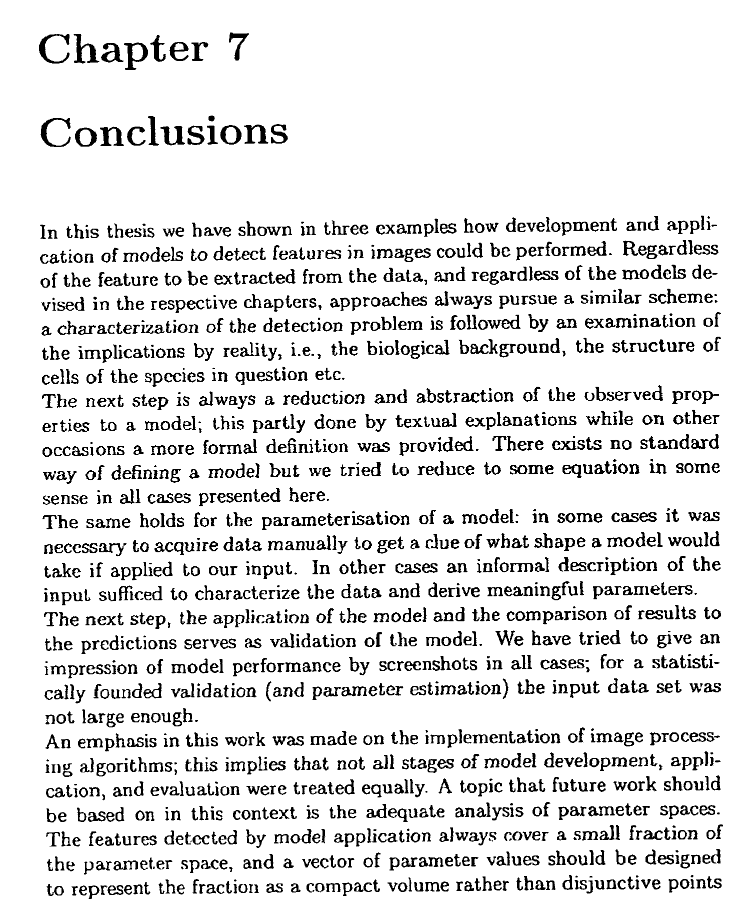

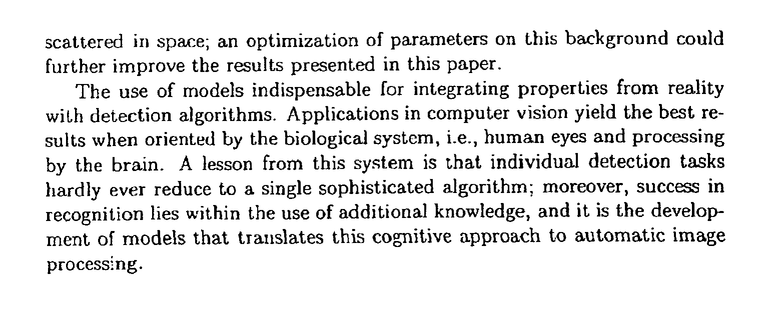

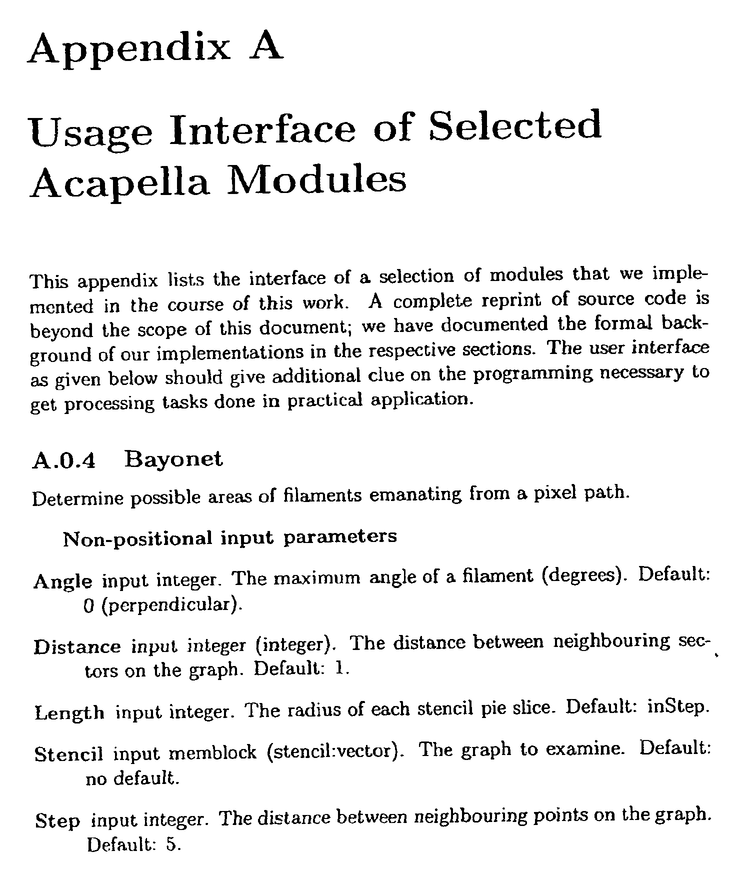

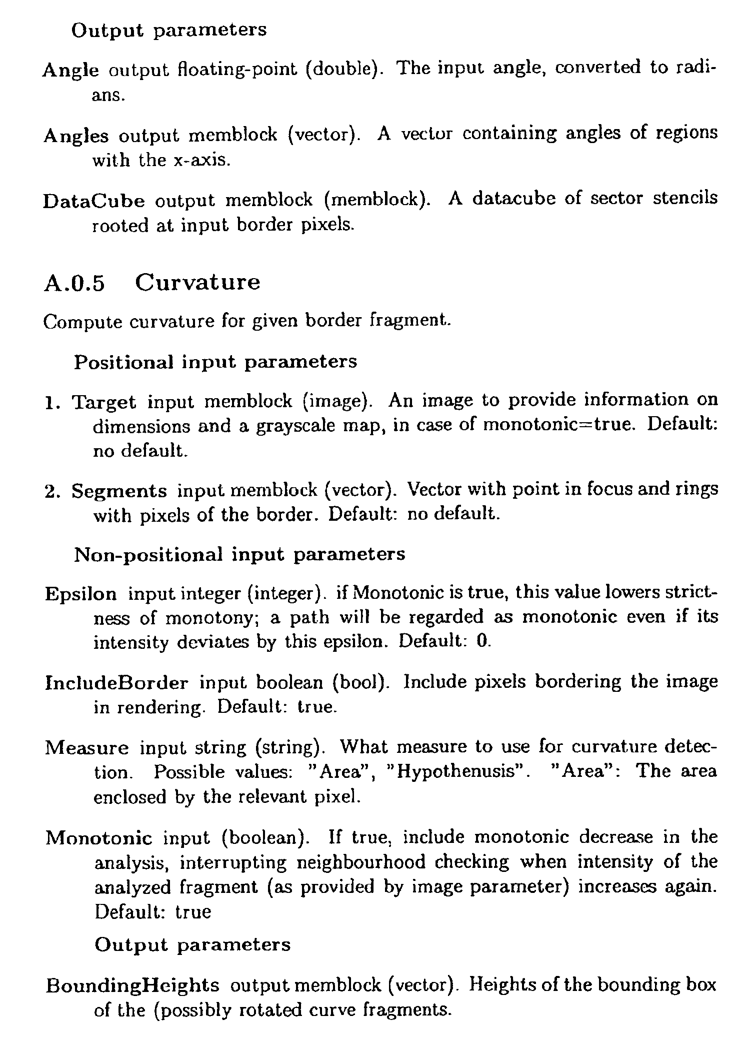

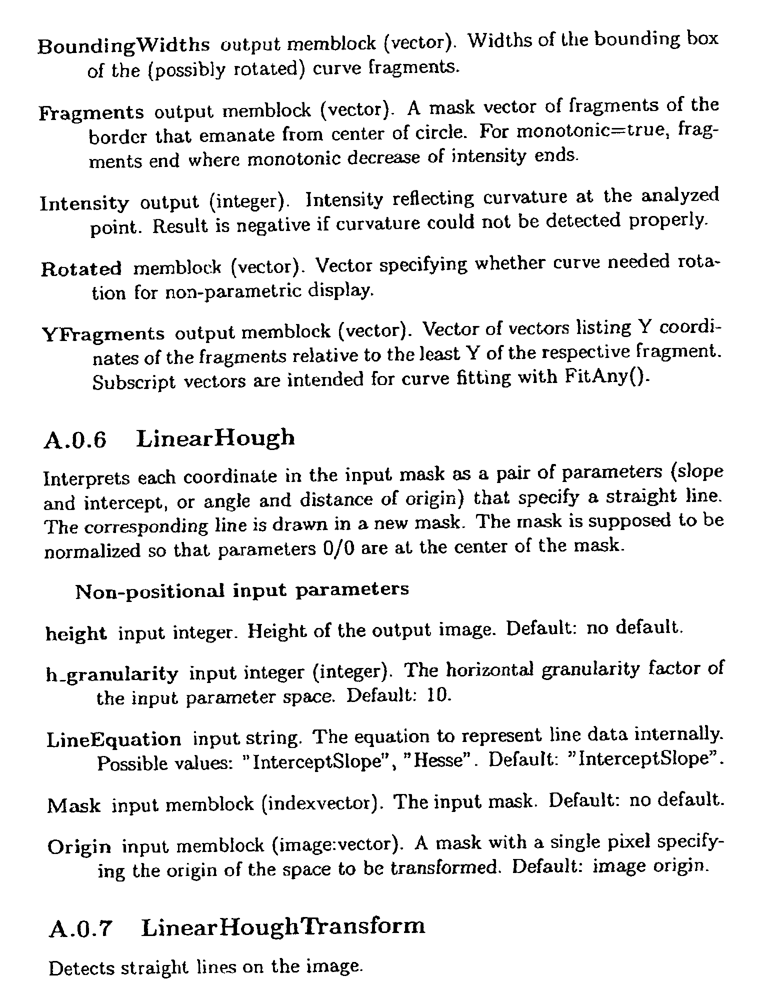

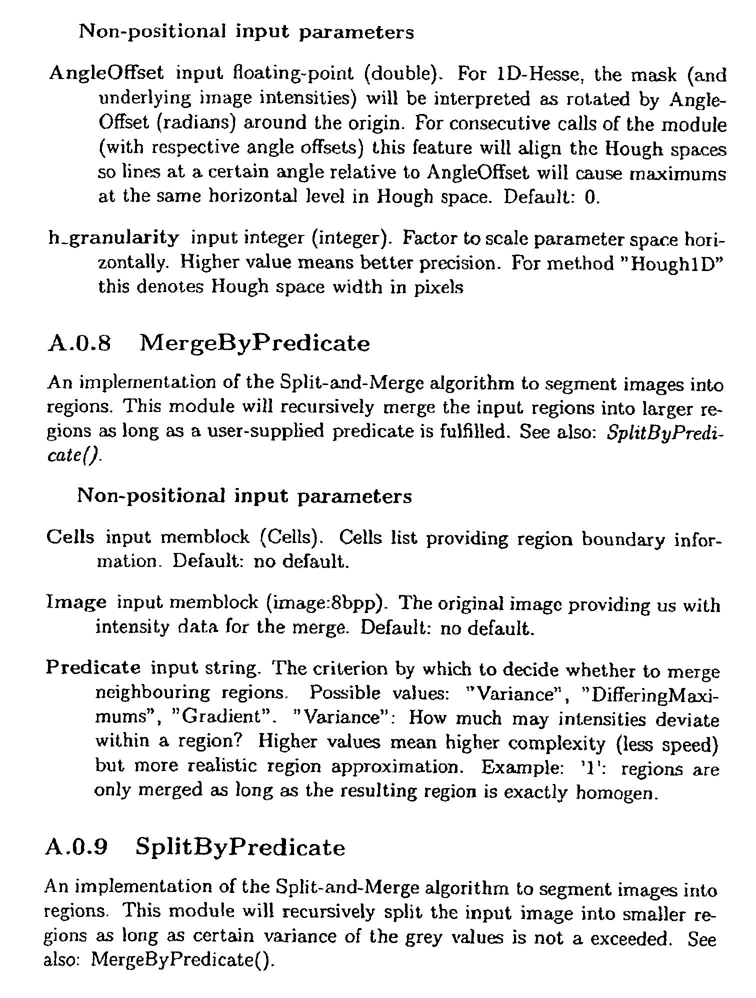

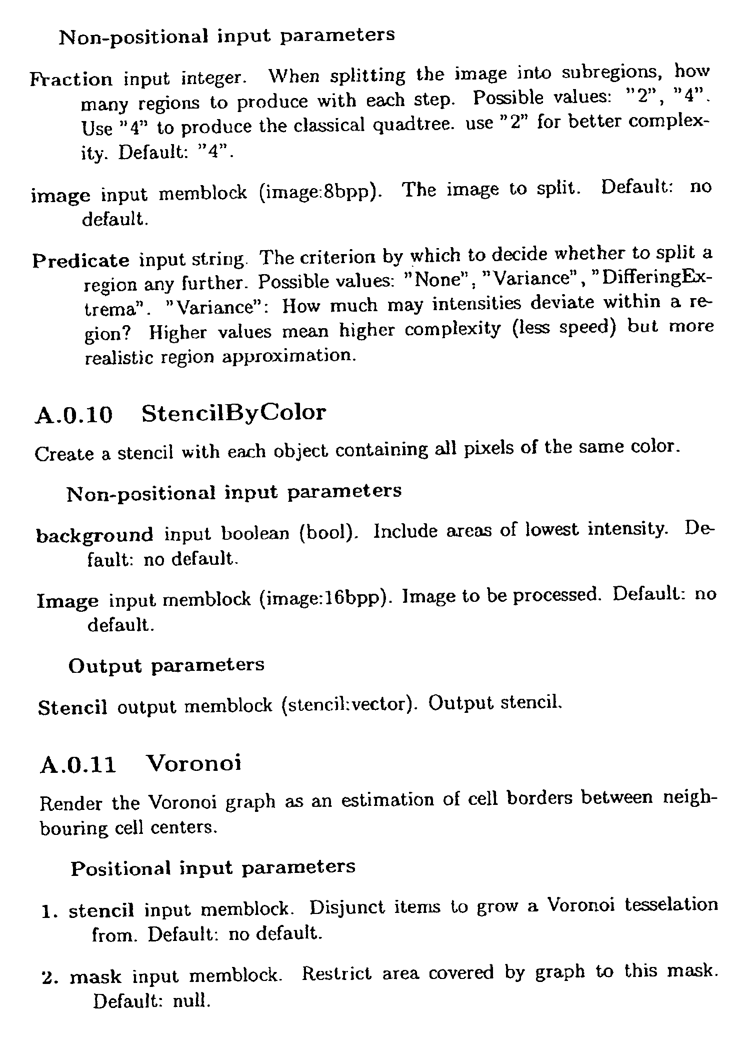

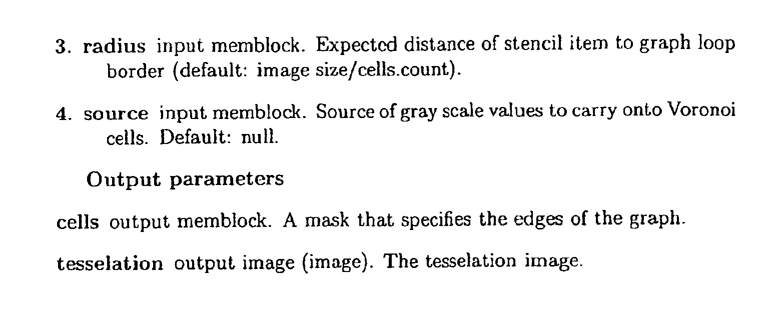

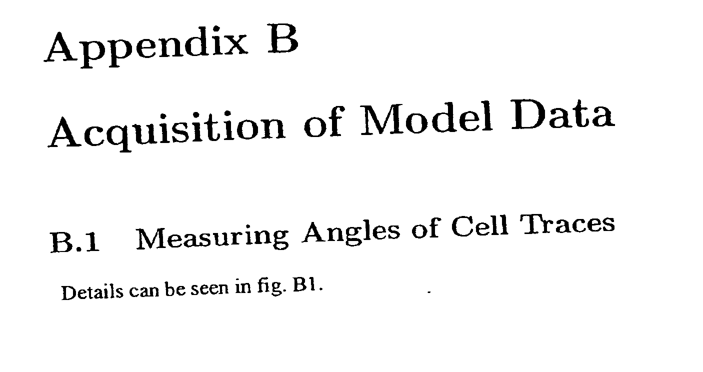

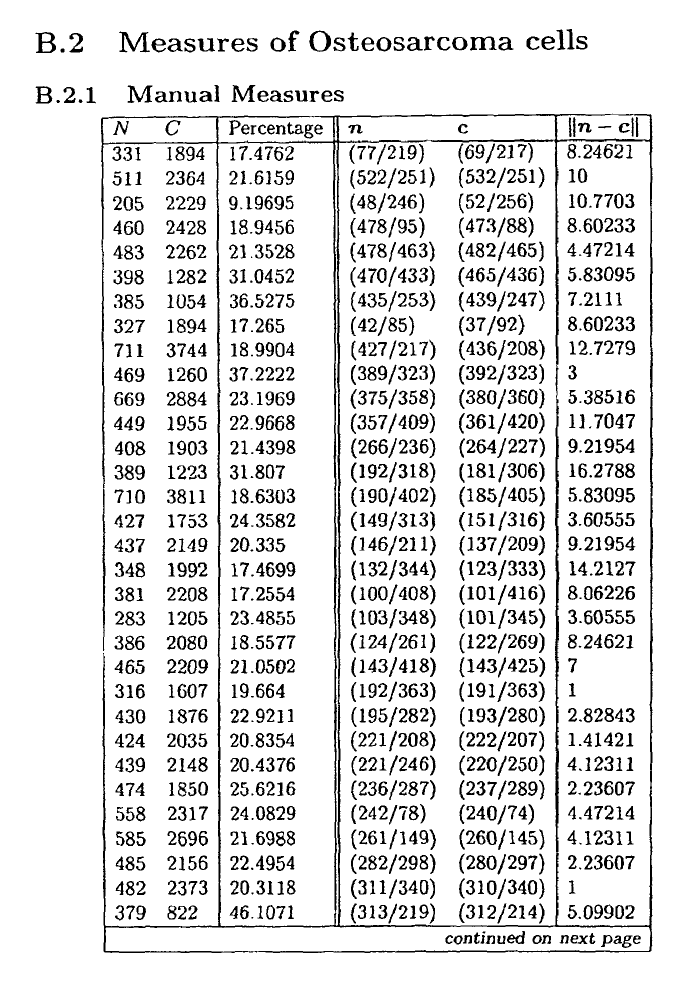

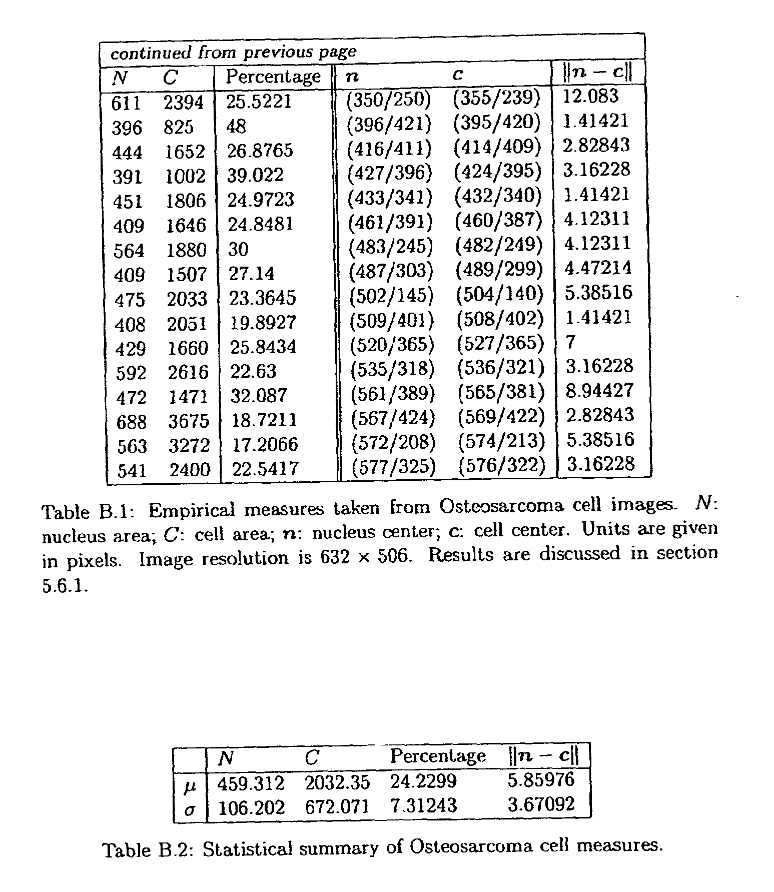

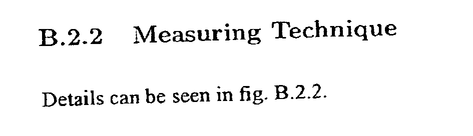

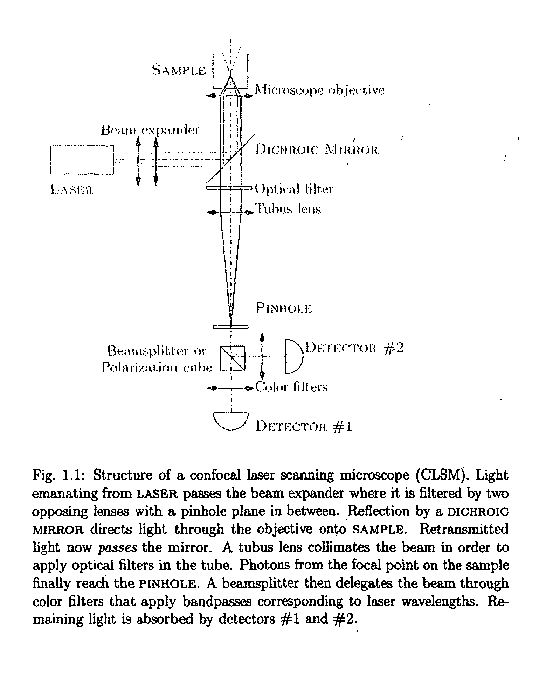

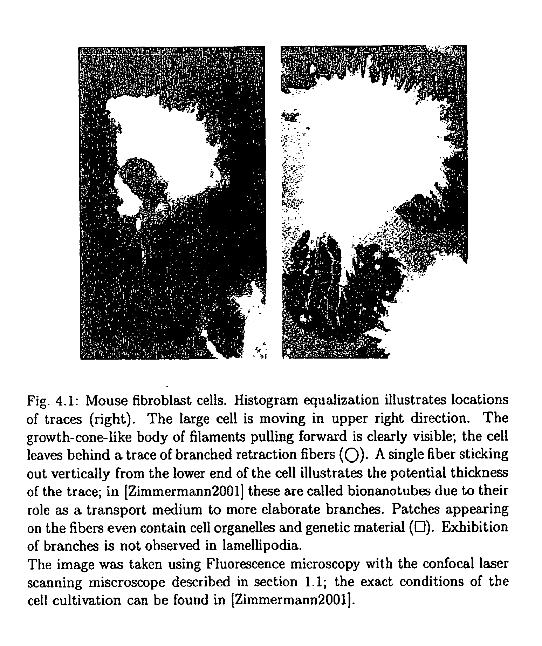

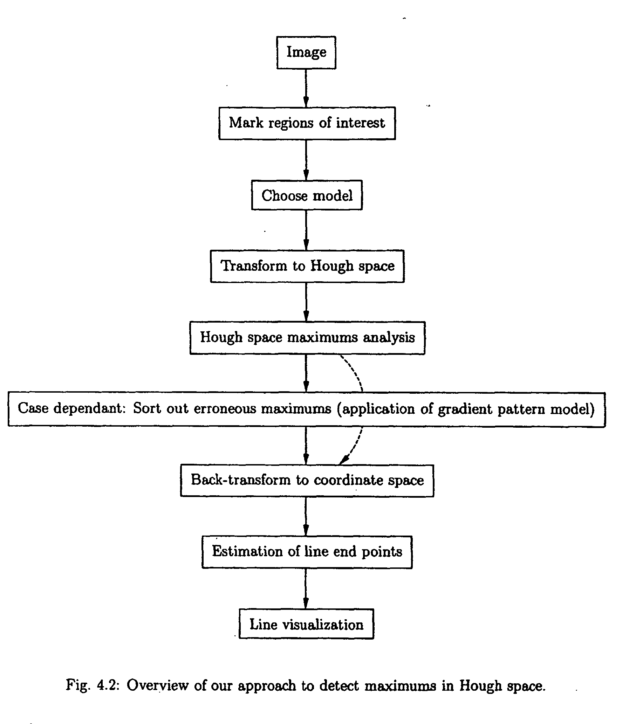

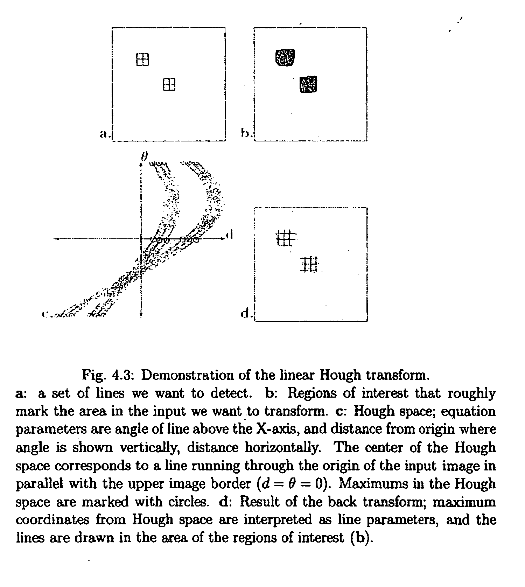

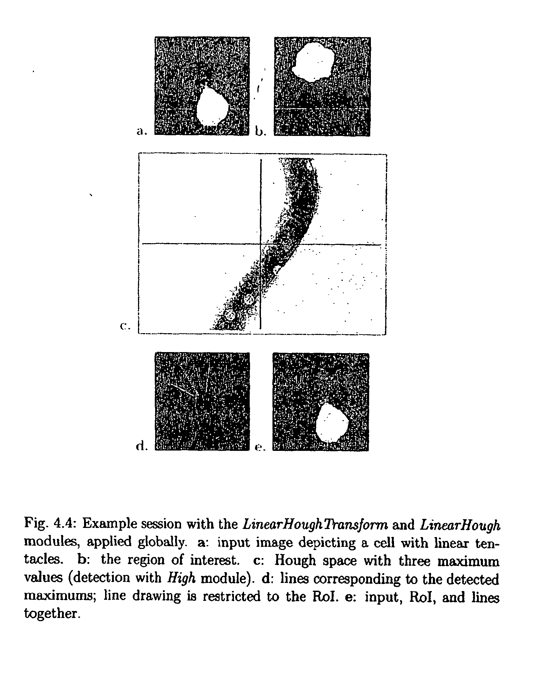

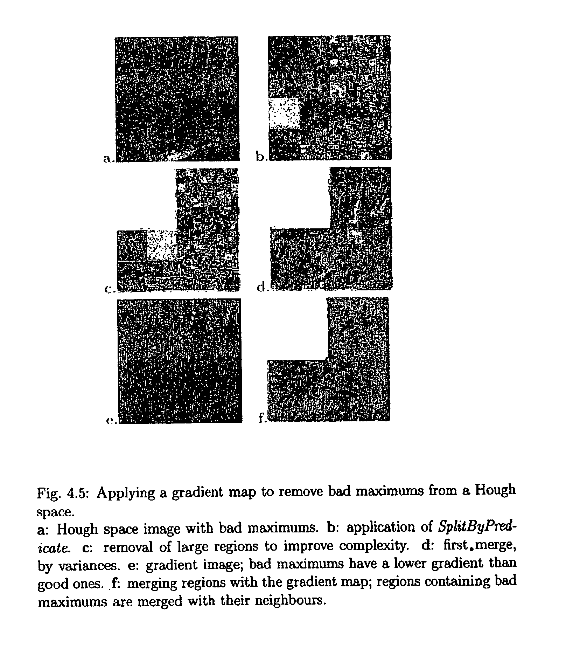

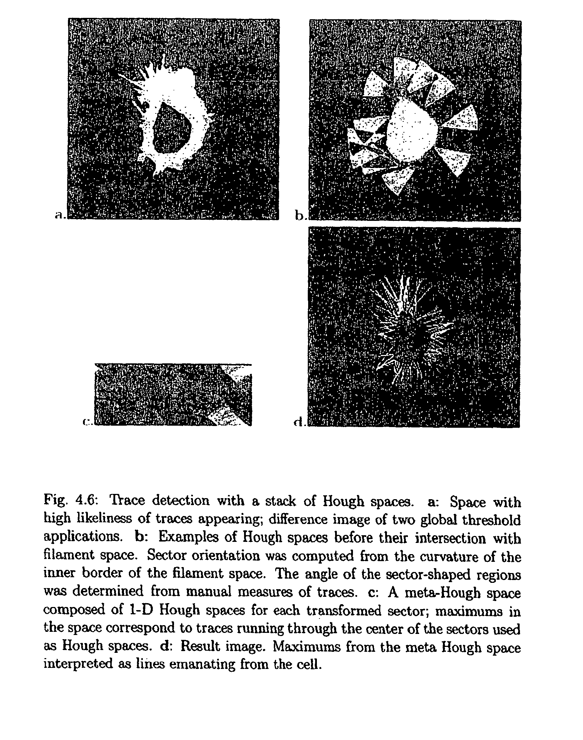

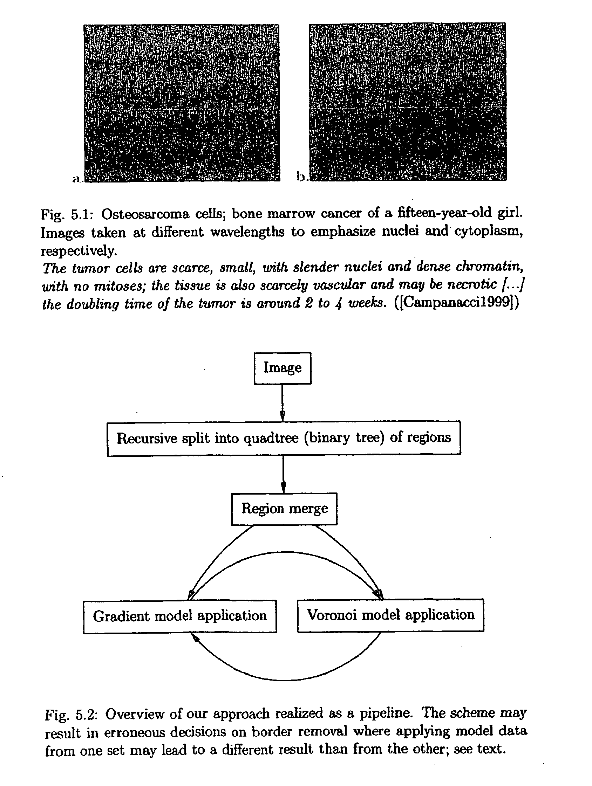

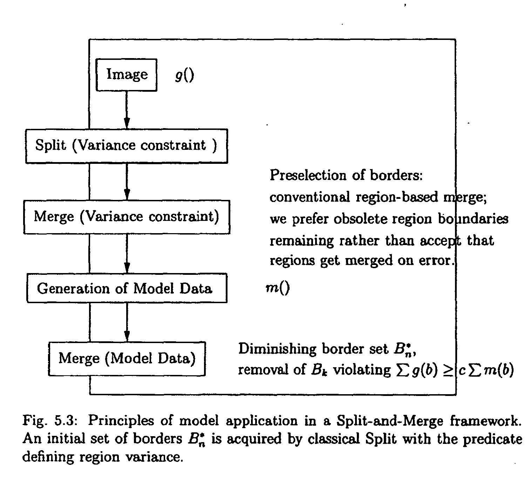

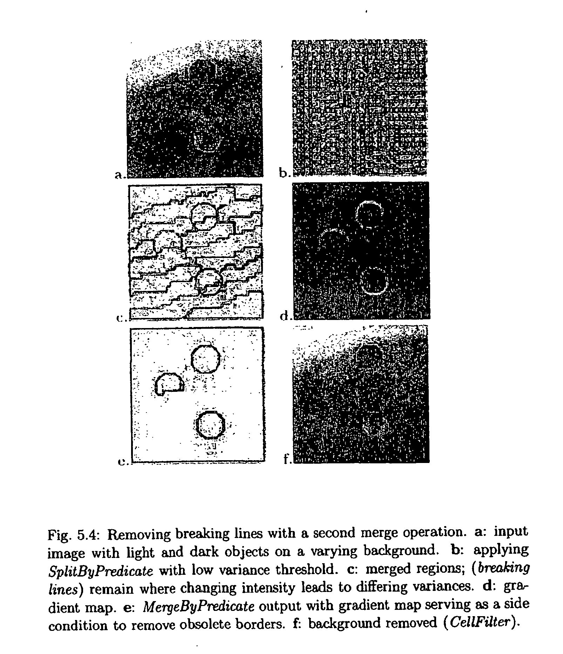

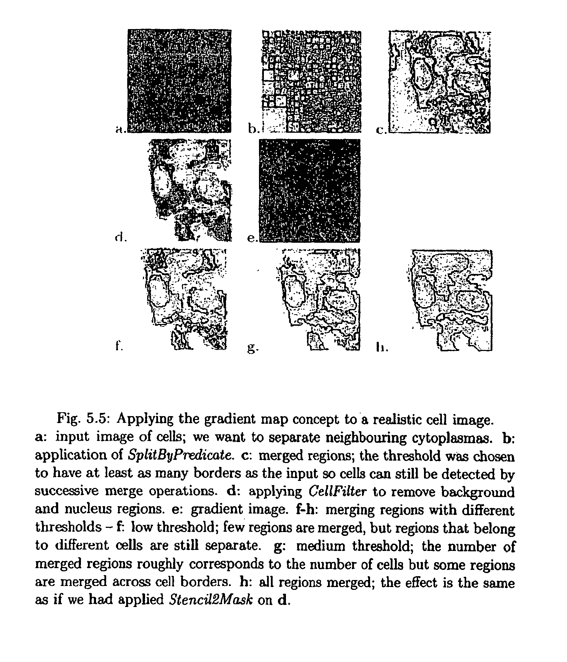

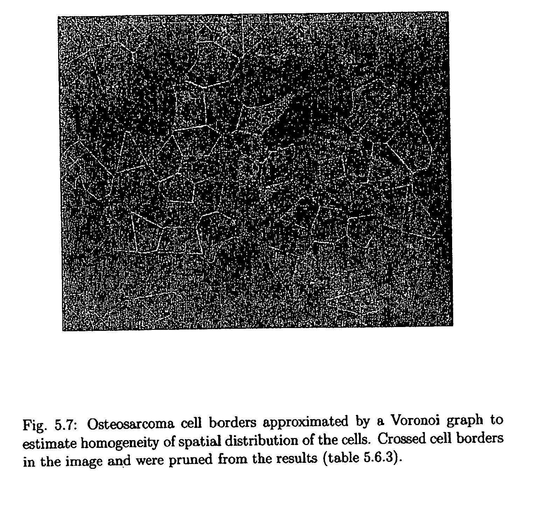

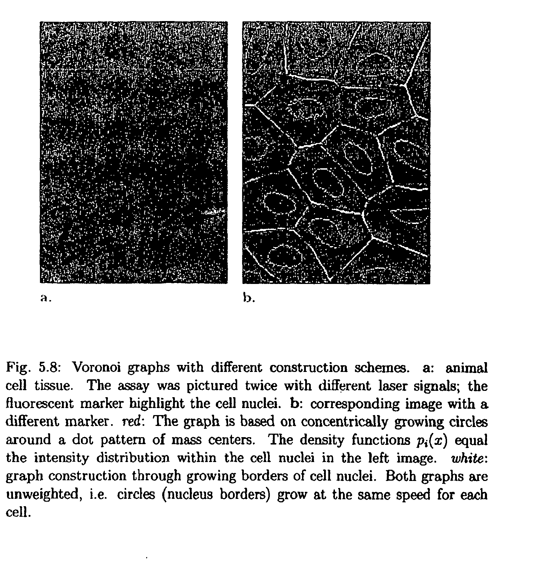

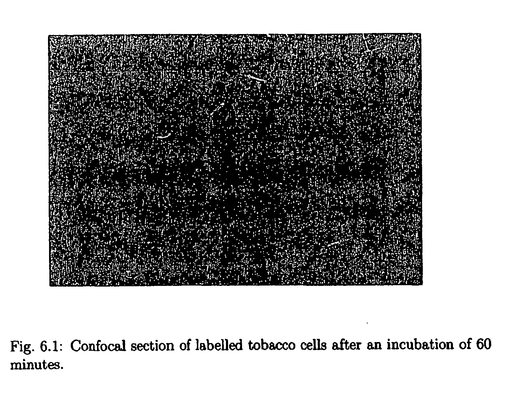

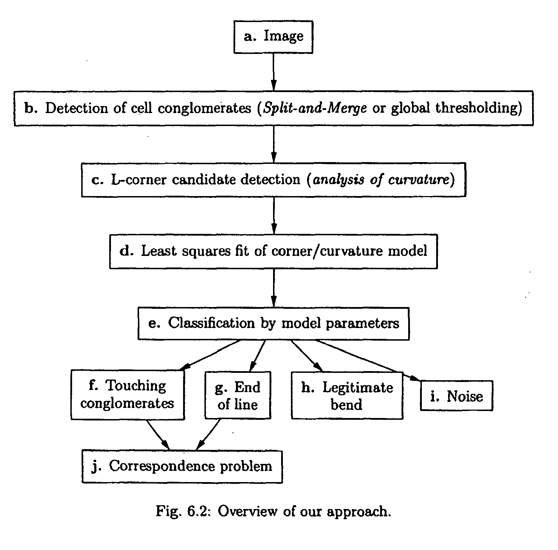

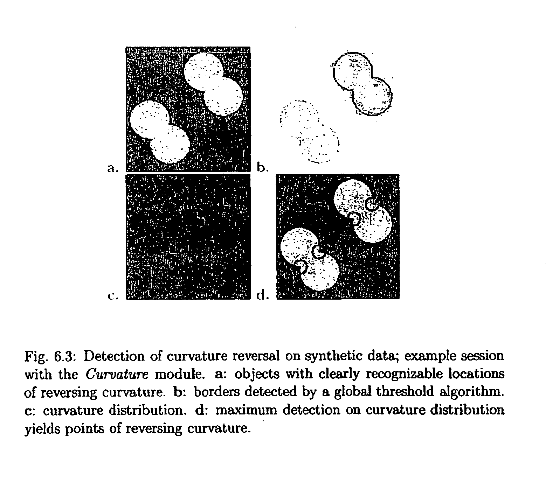

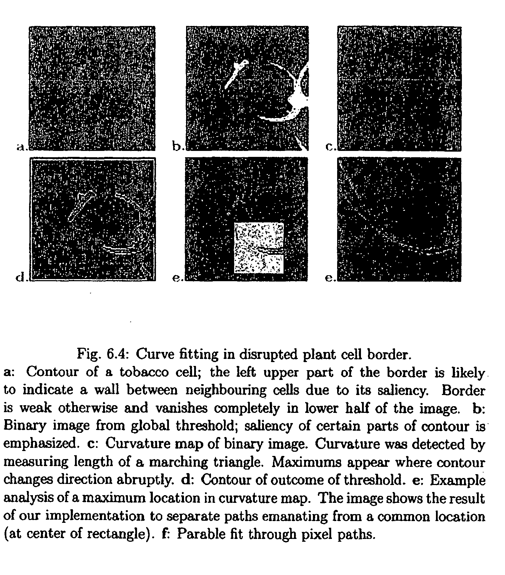

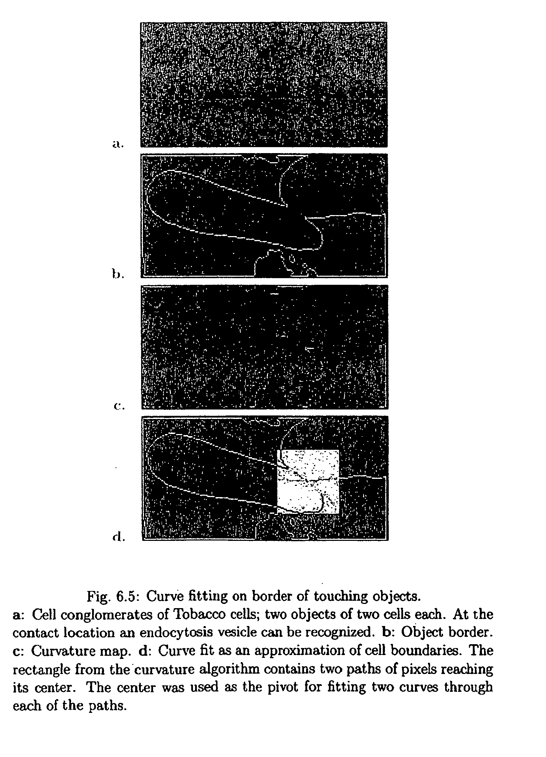

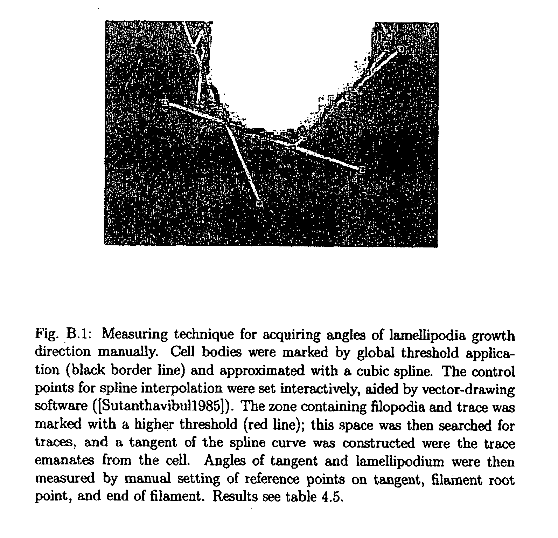

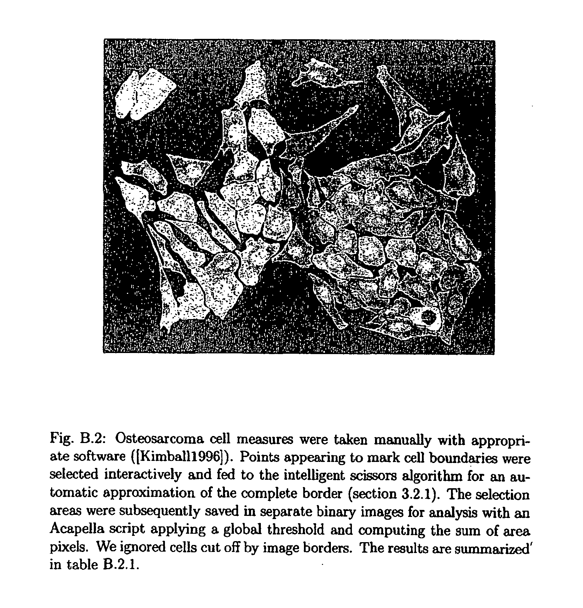

## Claims

1. A method for the detection of linear objects in images, particularly in images of chemical and/or biological samples such as cell images, comprising the following steps:
detecting a borderline of an imaged object,
defining at least one sector space which comprises a sector origin located on the borderline,
transforming the image space corresponding to the sector space through a transformation suited for basic geometric object indication, particularily for line identification,
within the transformed sector space, determining if there is one or more signatures corresponding to a basic geometric object, and
back transformation of the signatures from the transformed sector space into the sector space for representation of the basic geometric object.

2. The method according to claim 1 wherein the transforming is performed by means of linear, circular or general Hough transform, transform Fourier, Hadamard transform and/or Correlation of objects by convolution.

3. The method according to claim 1 or 2 wherein the borderline is detected by means of a global threshold method.

4. The method according to any one of claims 1 - 3 wherein the sector space is a circular sector space.

5. The method according to claim 4 wherein the sector origin is the center of the circle.

6. The method according to any one of claims 1 - 5 wherein the central axis of the sector space is oriented vertically to the borderline.

7. The method according to any one of claims 1 - 6, further comprising the step of:
intersecting a fiber space adjoining the borderline with the sector space to thus determine the corresponding image space.

8. The method according to any one of claims 1 - 7 wherein, for each point of the borderline, one sector space is defined.

9. The method according to any one of claims 1 - 8 wherein a plurality of sector spaces and preferably all of the sector spaces are combined.

10. The method according to claim 9 wherein the combining of the sector spaces is performed in the order of the sector origins.

11. The method according to any one of claims 1-10 wherein the borderline is the outer boarder of a cell, the border of a cell organelle und/or the border of a cell nucleus.
